(19) Europäisches Patentamt
European Patent Office
Office européen des brevets

(11) **EP 3 465 513 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(51) Int Cl.:
*G06F 21/35* (2013.01)    *G06F 21/41* (2013.01)

(21) Anmeldenummer: **17729059.0**

(86) Internationale Anmeldenummer:
**PCT/EP2017/063244**

(22) Anmeldetag: **01.06.2017**

(87) Internationale Veröffentlichungsnummer:
**WO 2017/207680 (07.12.2017 Gazette 2017/49)**

(54) **NUTZERAUTHENTIFIZIERUNG MITTELS EINES ID-TOKENS**

USER AUTHENTICATION BY MEANS OF AN ID TOKEN

AUTHENTIFICATION D'UTILISATEUR AU MOYEN D'UN JETON D'IDENTIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2016 DE 102016209543**

(43) Veröffentlichungstag der Anmeldung:
**10.04.2019 Patentblatt 2019/15**

(73) Patentinhaber: **Bundesdruckerei GmbH**
**10969 Berlin (DE)**

(72) Erfinder:
- **MORGNER, Frank**
**15537 Grünheide (DE)**
- **BASTIAN, Paul**
**10243 Berlin (DE)**
- **KRAUS, Micha**
**10827 Berlin (DE)**

(74) Vertreter: **Richardt Patentanwälte PartG mbB**
**Wilhelmstraße 7**
**65185 Wiesbaden (DE)**

(56) Entgegenhaltungen:
**EP-A1- 2 916 252    US-A1- 2004 177 258**

- **BUNDESAMT F?R SICHERHEIT IN DER INFORMATIONSTEC: "Technical Guideline TR-03110. Advanced Security Mechanisms for Machine Readable Travel Documents ? Extended Access Control (EAC), Password Authenticated Connection Establishment (PACE), and Restricted Identification (RI)", INTERNET CITATION, 9. November 2009 (2009-11-09), Seite 107pp, XP007911385, Gefunden im Internet: URL:https://www.bsi.bund.de/cae/servlet/contentblob/532066/publicationFile/45359/TR-03110_v202_pdf.pdf [gefunden am 2010-01-29]**

EP 3 465 513 B1

**Beschreibung**

Die vorliegende Erfindung betrifft ein Verfahren zum Authentifizieren eines Nutzers gegenüber einer Mehrzahl von Programmen derselben Sicherheitsdomäne mittels eines Computers und eines ID-Tokens. Zudem betrifft die vorliegende Erfindung einen ID-Token, ein Nutzerauthentifizierungsmodul, einen Computer sowie ein System zum Authentifizieren eines Nutzers gegenüber einer Mehrzahl von Programmen derselben Sicherheitsdomäne.

Aus dem Stand der Technik sind Nutzerauthentisierungsverfahren mittels Smartcard bekannt. Bei einem Windows-Login mit Smartcard verifiziert beispielsweise ein Login-Prozess eine eingegebene PIN gegenüber der Karte, um einen Nutzer anzumelden. Im Anschluss können weitere Programme, wie etwa ein Local-Security-Authority-Prozess die Smartcard verwenden, um den Nutzer an ein einem Domänencontroller anzumelden. Für letztere Smartcard-Verwendung ist aber in der Regel die Auslösung eine erneute PIN-Verifikation notwendig. Um einen hohen Grad an Sicherheit für die Nutzer-PIN des Login-Prozesses zu gewährleisten und diese zu diesem Zweck nicht an alle nachgelagerten Prozesse weitergeben zu müssen, ist es bei einigen Smartcards möglich, eine Session-PIN anzulegen. Die Session-PIN hat dieselben Zugriffsrechte, wie die Nutzer-PIN, ist aber nur solange gültig wie die Karte eingeschaltet ist.

Dieses Verfahren funktioniert unkompliziert bei kontaktbasierten Smartcard, d.h. Smartcard, mit einer Kommunikationsschnittstelle zum ausschließlich kontaktbehafteten Datenaustausch. Da in diesem Fall die Gefahr eines Abfangens von übertragenen Daten gering ist, kann eine Klartext-PIN-Verifikation erfolgen. Bei kontaktlosen Smartcards werden jedoch zur Absicherung der übertragenen Daten aufwendige PIN-Verifikationsprotokolle eingesetzt. Wird nun auch eine Session-PIN für jedes der nachfolgenden Programme, dass eine Nutzerauthentifizierung erfordert, über eines dieser aufwendige Protokolle verifiziert, summiert sich die notwendige Zeit für die Ausführung all dieser Protokolle entsprechend.

Ein weiteres, darauf aufbauendes Problem ergibt sich bei der Verwendung einer Smartcard, welche zur Eingabe einer PIN zur Authentifizierung des Nutzer über eine Schnittstelle der Smartcard selbst konfiguriert ist. Erfolgt keine Eingabe an dem PC fehlt es an einem gemeinsamen, geteilten Geheimnis, wie etwa einer PIN, zwischen Computer und ID-Token, welches im Allgemeinen eine Voraussetzung bekannter PIN-Verifikationsprotokolle ist.

Die US 2004/177258 A1 beschreibt ein Verfahren und eine Vorrichtung zur automatischen Benutzerauthentifizierung. Das Verfahren umfasst ein Empfangen von Informationen an einem Gerät, wobei das Gerät einen Berechtigungscontainer enthält, ein Speichern der Informationen im Berechtigungscontainer, ein Durchführen kryptografischer Berechnungen mit den empfangenen Informationen und Bereitstellen der verschlüsselten Informationen auf Anfrage.

Die EP 2 916 252 A1 beschreibt ein elektronisches Transaktionsverfahren unter Verwendung eines ID-Tokens, der einem Nutzer zugeordnet ist, wobei der ID-Token einen elektronischen Speicher mit einem geschützten Speicherbereich aufweist, in dem ein oder mehrere Attribute gespeichert sind, wobei ein Zugriff auf den geschützten Speicherbereich nur über einen Prozessor des ID-Tokens möglich ist, und wobei der ID-Token eine Kommunikations-Schnittstelle zur Kommunikation mit einem Lesegerät eines Nutzer-Computersystems aufweist. Das Verfahren umfasst die folgenden Schritten: Übertragung einer Transaktionsanforderung von dem Nutzer-Computersystem an ein Dienst-Computersystem über ein Netzwerk; Übertragung eines Request von dem Dienst-Computersystem über das Nutzer-Computersystems an ein ID-Provider-Computersystem, wobei die Übertragung über das Netzwerk erfolgt, wobei der Request eine Attributspezifikation, der aus dem ID-Token für die Durchführung der Transaktion auszulesenden Attribute beinhaltet; Authentifizierung des Nutzers gegenüber dem ID-Token; Authentifizierung des ID-Provider-Computersystems gegenüber dem ID-Token über das Netzwerk; unter der Voraussetzung der erfolgreichen Authentifizierung des Nutzers und des ID-Provider-Computersystems gegenüber dem ID-Token, Auslesen des oder der Attribute gemäß der Attributspezifikation durch das ID-Provider-Computersystem aus dem ID-Token über das Netzwerk mit Ende-zu-Ende-Verschlüsselung; Erzeugung einer ersten Transaktionsnummer für die Transaktion durch das ID-Provider-Computersystem mit Hilfe eines kryptographischen Verfahrens; Übertragung einer Response von dem ID-Provider-Computersystem über das Nutzer-Computersystem an das Dienst-Computersystem, wobei die Übertragung der Response über das Netzwerk erfolgt, wobei die Response das oder die ausgelesenen Attribute und die erste Transaktionsnummer beinhaltet, und wobei die Response von dem ID-Provider-Computersystem signiert ist; Speicherung der von dem ID-Provider-Computersystem erzeugten ersten Transaktionsnummer in einem Speicher durch das Dienst-Computersystem; Erzeugung einer zweiten Transaktionsnummer für die Transaktion durch das Nutzer-Computersystem, das Lesegerät oder den ID-Token mit Hilfe desselben kryptographischen Verfahrens; Übertragung der zweiten Transaktionsnummer von dem Nutzer-Computersystem an das Dienst-Computersystem über das Netzwerk; Lesen der ersten Transaktionsnummer aus dem Speicher durch das Dienst-Computersystem; Prüfung der ersten und der zweiten Transaktionsnummern auf Übereinstimmung durch das Dienst-Computersystem; unter der Voraussetzung, dass die ersten und der zweiten Transaktionsnummern übereinstimmen, Durchführung der Transaktion mithilfe der Transaktionsdaten und des oder der Attribute durch das Dienst-Computersystem.

Die technische Richtlinie TR-03110 "Advanced Security Mechanisms for Machine Readable Travel Documents", Version 2.02, des Bundesamts für Sicherheit in der Informationstechnik beschreibt elektronische Sicherheitsmechanismen für elektronische Reisedokumente, um die Authentizität (einschließlich Integrität), Originalität und Vertraulichkeit von Daten zu schützen, die auf einem in dem Reisedokument eingebetteten Hochfrequenzchip gespeichert sind.

Der Erfindung liegt demgegenüber die Aufgabe zugrunde, ein effizientes, schnelles und sicheres Verfahren zum Authentifizieren eines Nutzers gegenüber einer Mehrzahl von Programmen mittels eines Computers und eines ID-Tokens bereitzustellen.

Die der Erfindung zugrunde liegenden Aufgaben werden jeweils durch die Merkmale der unabhängigen Patentansprüche gelöst. Ausführungsformen der Erfindung sind in den abhängigen Patentansprüchen angegeben.

Ausführungsformen umfassen ein Verfahren zum Authentifizieren eines Nutzers gegenüber einer Mehrzahl von Programmen derselben Sicherheitsdomäne mittels eines Computers und eines ID-Tokens. Der ID-Token ist dem Nutzer kryptographisch gesichert zugeordnet. An den Computer ist ein Terminal mit einer ersten Kommunikationsschnittstelle zur kontaktlosen Kommunikation mit dem ID-Token gekoppelt. Der ID-Token umfasst eine zweite Kommunikationsschnittstelle zur kontaktlosen Kommunikation mit dem Terminal. Jedes der Programme ist derart konfiguriert, dass das jeweilige Programm eine erfolgreiche Authentifizierung des Nutzers gegenüber dem entsprechenden Programm erfordert. Der Computer und der ID-Token umfassen jeweils ein gemeinsames, geteiltes Geheimnis, welches zum Ausführen einer Ende-zu-Ende-Verschlüsselung vorgesehen ist, wobei das gemeinsame, geteilte Geheimnis auf Seiten des Computers von einem Nutzerauthentifizierungsmodul verwaltet wird. Das Nutzerauthentifizierungsmodul gehört zu der Sicherheitsdomäne.

Das Verfahren umfasst:

- Auswahl eines ersten Programms der Mehrzahl von Programmen,
- Bereitstellen des gemeinsamen, geteilten Geheimnisses für das erste Programm durch das Nutzerauthentifizierungsmodul,
- Ausführen einer ersten Kommunikationssitzung zwischen dem ersten Programm und dem ID-Token, wobei die erste Kommunikationssitzung einen Datenaustausch nach einem Request-Response-Protokoll umfasst, welcher durch eine Ende-zu-Ende-Verschlüsselung unter Verwendung des gemeinsamen, geteilten Geheimnisses geschützt ist,
- Auswahl eines zweiten Programms der Mehrzahl von Programmen,
- Bereitstellen des gemeinsamen, geteilten Geheimnisses für das zweite Programm durch das Nutzerauthentifizierungsmodul und
- Nach Beendigung der ersten Kommunikationssitzung Umschalten auf eine zweite Kommunikationssitzung zwischen dem zweiten Programm und dem ID-Token, wobei die zweite Kommunikationssitzung einen Datenaustausch nach einem Request-Response-Protokoll umfasst, welcher durch eine Ende-zu-Ende-Verschlüsselung unter Verwendung des gemeinsamen, geteilten Geheimnisses geschützt ist.

Der Begriff "ID-Token" bezeichnet eine Vorrichtung, wie beispielsweise ein tragbares elektronisches Gerät, zum Beispiel einen sogenannten USB-Stick, eine Chipkarte, oder ein Dokument.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Nach Ausführungsformen weist der ID-Token keine eigene Energieversorgung auf. Als Energiequelle kann vielmehr eine Vorrichtung zum "Ernten" (energy harvesting) von Energie dienen, welche von dem Terminal an das ID Token übertragen wird, wie beispielsweise eine RFID-Antenne.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitalen Zertifikate dient in einem asymmetrischen Kryptosystemen dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikates, des sogenannten Wurzelzertifikats, und des durch dieses zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Unter einer "Dokumenten-PKI" wird hier eine public key infrastructure (PKI) verstanden, die zur Erstellung von Zertifikaten für ID-Token, also Dokumente, dient, wobei die Zertifikate zur Prüfung der Authentizität des betreffenden ID-Tokens verwendet werden.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Bei symmetrischen Schlüsseln verwenden beide Teilnehmer des entsprechenden symmetrischen Kryptosystems denselben Schlüssel. Bei manchen symmetrischen Verfahren sind die beiden Schlüssel nicht identisch, aber können leicht auseinander berechnet werden. Symmetrische Schlüssel werden beispielsweise zum Berechnen Von MACs verwendet.

Unter einem "statischen" Schlüssel wird im Folgenden ein kryptografischer Schlüssel bzw. Datenwert verstanden, welcher in einem nicht-flüchtigen Speichermedium gespeichert ist und für mehr als nur einer Sitzung Verwendung finden kann. Im Gegensatz dazu werden "ephemere" Schlüssel, d.h. temporäre kryptografischer Schlüssel bzw. Datenwerte, nur für eine Sitzung generiert und nicht permanent gespeichert, sodass sie in einer weiteren Sitzung nicht mehr verwendet werden können.

Unter einem "statischen" Zertifikat wird im Folgenden ein digitales Zertifikat verstanden, welches für mehr als nur einer Sitzung Verwendung finden kann. Ein statisches Zertifikat kann beispielsweise einen statischen öffentlichen Schlüssel umfassen und mittels eines statischen privaten Schlüssels signiert sein. Im Gegensatz dazu werden "ephemere" Zertifikate mittels temporärer Schlüssel nur für eine Sitzung generiert, sodass sie in einer weiteren Sitzung nicht mehr verwendet werden können.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer "Sicherheitsdomäne" wird hier eine Computerinfrastruktur verstanden, welche kryptographisch und/oder physikalisch gegen unerlaubte Zugriffe seitens Dritter geschützt ist. Bei einer Sicherheitsdomäne kann es sich demnach um eine Mehrzahl von Programmen mit kryptographisch gesicherter Kommunikation untereinander, einen gesicherten Speicherbereich eines Computers, einen allein stehenden (stand alone) Computer mit abgesicherten Zugriffsmöglichkeiten, wie beispielsweise einer Firewall, Passwortabfrage und/oder kryptographischer Verschlüsselung, oder ein abgesichertes Netzwerk handeln, welches abgesicherte Zugriffsmöglichkeiten und kryptographisch verschlüsselte Kommunikationskanäle umfasst, wie beispielsweise VPN.

Unter einem "Sendefolgezähler" oder "Send Sequence Counter" wird hier ein Zähler verstanden, welcher Datenpakete, beispielsweise APDUs, abhängig von ihrem Sendezeitpunkt jeweils mit einer Folgenummer versieht. Dadurch wird ein Entfernen oder Einfügen eines Datenpakets im Protokollverlauf auffallen, was vorbestimmte Sicherungsmaßnahmen wie den Abbruch der Kommunikation seitens des Empfängers des Datenpakets zur Folge haben kann. Der Startwert des Sendefolgezählers ist beispielsweise eine Zufallszahl, welche am Anfang des Kommunikationsablaufes zwischen einer Chipkarte und dem Computer von der Chipkarte auf Anforderung an den Computer gesendet wird. Bei jeder weiteren Übertragung eines Datenpakets, beispielsweise einer APDU, wird der Zähler inkrementiert. Ein Sendefolgezähler kann beispielsweise dadurch in Kommando- und Antwort-APDUs untergebracht sein, dass er direkt als Zahlenwert in einem Datenobjekt in die jeweilige APDU eingefügt wird oder dass er mit der gleichen Anzahl von Daten in der APDU mit XOR verknüpft wird. Beispielsweise wird die kryptografische Prüfsumme berechnet und anschließend die veränderten Daten wieder restauriert. Dem Empfänger dieser APDU ist der Sollwert des Sendefolgezählers bekannt, und er kann damit die APDU in gleicher Weise wie der Sender verändern. Anschließend berechnet er die kryptografische Prüfsumme und prüft die Richtigkeit der empfangenen APDU. Schutz bietet der Sendefolgezähler vor allem gegen Wiedereinspielung bereits gesendeter APDUs oder vor dem Ausschneiden von APDUs.

Unter einem "Speicher" werden hier sowohl flüchtige als auch nicht flüchtige elektronische Speicher bzw. digitale Speichermedien verstanden.

Unter einem "nicht-flüchtigen elektronischen Speicher" wird hier ein Speicher zur dauerhaften Speicherung von Daten, insbesondere von statischen kryptographischen Schlüsseln, Attributen oder Kennungen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein solcher nicht-flüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, insbesondere von ephemeren kryptographischen Schlüsseln oder eines gemeinsamen, geteilten Geheimnisses oder Statusflag, verstanden, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem Computer wird im Folgenden insbesondere ein Nutzer-Computer bzw. Nutzer-Endgerät verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer®, Safari®, Google Chrome®, Firefox® oder einem anderen Anwendungsprogramm handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Unter einem "Terminal" wird hier ein elektronisches Gerät verstanden, welches ein Lesegerät umfasst, das einen Lesezugriff und/oder einen Schreibzugriff auf das Mobilfunkgerät ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Mobilfunkgerät ausgestattet ist.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, Helligkeit, Beschleunigung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Darüber hinaus umfassen Sensoren insbesondere auch Elemente zum Erfassen einer Informationseingabe, wie beispielweise eine Tastatur, Tastenfeld, Maus, Touchscreen und/oder Elemente zum Erfassen von Gesten.

Unter einem "Programm" wird hier ohne Einschränkung jede Art von Computerprogramm verstanden, welches maschinenlesbare Instruktionen zur Steuerung einer Funktionalität des Computers umfasst.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer eine Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Gemäß einem Request-Response-Protokoll schickt ein erster Teilnehmer einer zweiseitigen Kommunikation einen sogenannten Request (Anforderung) an den zweiten Teilnehmer. Ein Request enthält einen oder mehrere Befehle, welche angeben, welche Funktionen der zweiten Teilnehmer ausführen soll. Nachdem der zweite Teilnehmer den oder die Befehle gemäß Request verarbeitet hat, antwortet er mit einer Response (Antwort).

Ein Request-Response-Protokoll kann beispielsweise mittels APDUs implementiert werden. Eine "Application Protocol Data Unit" (APDU) ist eine Kommunikationseinheit einer Kommunikation zwischen einer Chipkarte und einer Chipkartenanwendung nach dem ISO 7816-Standard. Bei einer APDU handelt es sich um eine Kommunikationseinheit auf Anwendungsebene, was im OSI-Schichtenmodell der Schicht 7 entspricht. Es können Kommando-APDUs ("command APDUs") und Antwort-APDUs ("response APDUs") unterschieden werden. Kommando-APDUs übermitteln Kommandos an die Chipkarte, während die Antwort-APDUs die Antworten der Chipkarte auf entsprechende Kommandos übermitteln. Die Strukturen von Kommando-APDU und Antwort APDU sind in der Norm ISO 7816-4 festgelegt. Eine Kommando-APDU besteht aus einem Kopf ("header") mit Kopfdaten und einem optionalen Rumpf ("body") mit Nutzdaten, d.h. Kommandos. Eine Antwort-APDU besteht aus einem optionalen Rumpf ("body") mit Nutzdaten, die Antwortdaten des Kommandos, und einem obligatorischen Abschluss ("trailer"). Der Abschluss gibt Auskunft über die erfolgreiche Abarbeitung des Kommandos oder die Art des Fehlers, der die Abarbeitung verhindert oder unterbrochen hat.

Im Falle von verschlüsselten APDUs sind die Nutzdaten jeweils mit einem kryptographischen Schlüssel verschlüsselt, wohingegen die Kopfdaten unverschlüsselt bleiben, um eine korrekte Zuordnung und Abarbeitung der APDUs zu gewährleisten. Zur Authentifizierung des Senders der APDU kann diese zusätzlich einen kryptographischen Authentifizierungsschlüssel umfassen.

Ausführungsformen können den Vorteil haben, dass eine effiziente Nutzung der Mehrzahl von Programmen, insbesondere eine effiziente Nutzerauthentifizierung gegenüber diesen ermöglicht wird, ohne dass permanente Nutzergeheimnisse an nachgelagerte Prozesse übergeben werden müssen. Insbesondere ermöglichen Ausführungsformen einen Single-Sign-On-Prozess mit ID-Token, welche zur kontaktlosen Kommunikation konfiguriert sind und/oder mit einem biometrischen Sensor als Biometrie System-on-Card (BSoC) oder auch als Biometrie System-on-Document (BSoD) ausgestaltet sind.

Durch das Umschalten zwischen den Programmen wird zudem ein Zeitmultiplexverfahren realisiert, d.h. es werden in unterschiedlichen Zeitabschnitten bzw. Zeitschlitzen die Daten verschiedener Sender bzw. Programme über einen unter Verwendung des gemeinsamen, geteilten Geheimnisses verschlüsselten Kanal übertragen. Im vorliegenden Fall erfolgt ein Umschalten von einer ersten Kommunikationssitzung zu einer zweiten Kommunikationssitzung allerdings erst nachdem die erste Kommunikationssitzung beendet wurde. Hierbei kann das Umschalten von der ersten zur zweiten Kommunikationssitzung direkt nach Beendigung der ersten Kommunikationssitzung erfolgen oder zeitverzögert, wenn beispielsweise zunächst für kein zweites Programm eine Notwendigkeit besteht mit dem ID-Token zu kommunizieren. Sobald sich dann für ein zweites Programm eine Notwendigkeit ergibt mit dem ID-Token zu kommunizieren, beispielsweise zur Authentifizierung des Nutzer, wird die zweite Kommunikationssitzung aufgebaut. Zwischen Beendigung der ersten Kommunikationssitzung und Aufbau der zweiten Kommunikationssitzung besteht nach Ausführungsformen keine Kommunikationssitzung zwischen einem der Programme und dem ID-Token.

Dadurch dass der ID-Token sich das gemeinsame, geteilte Geheimnis auch nach Beendigung der ersten Kommunikationssitzung weiterhin speichert, kann das einmal erzeugte gemeinsame, geteilte Geheimnis für den gesamten Zeitmultiplex mehrerer Kommunikationssitzungen verwendet werden. Durch eine Speicherung des gemeinsamen, geteilten Geheimnisses im flüchtigen Speicher des ID-Tokens kann zudem erreicht werden, dass das gemeinsame, geteilte Geheimnis keinen statischen Datenwert darstellt, sondern bei Unterbrechung der Stromversorgung des flüchtigen Speichers gelöscht wird. Dies geschieht beispielsweise nach Beendigung einer letzten Kommunikationssitzung. Ausführungsformen erlauben somit ein erstmaliges Erzeugen eines gemeinsamen, geteilten Geheimnisses, welches anschließend für weitere Programme derselben Sicherheitsdomäne bereitgestellt wird. Das gemeinsame, geteilte Geheimnis ist solange gültig, solange es von dem ID-Token und dem Computer gespeichert wird. Wird das gemeinsame, geteilte Geheimnis aus dem flüchtigen Speicher des ID-Tokens oder Computers gelöscht, kann keine Ende-zu-Ende-Verschlüsselung mit dem ID-Token ausgeführt werden. Mithin muss dann ein neues gemeinsames, geteiltes Geheimnis erzeugt werden, beispielsweise im Zuge eines neuen Login-Prozesses.

Nach Ausführungsformen ist das gemeinsame, geteilte Geheimnis auf Seiten des ID-Tokens in einem flüchtigen Speicher oder einem nicht-flüchtigen Speicher des ID-Tokens gespeichert.

Ausführungsformen können den Vorteil haben, dass das gemeinsame, geteilte Geheimnis bei einer Speicherung in einem flüchtigen Speicher automatisch gelöscht wird, wenn nach Beendigung einer Sitzung, welche eine Mehrzahl von Kommunikationssitzungen umfasst hat, die Energieversorgung des flüchtigen Speichers unterbrochen wird. Eine Sitzung wird beispielsweise durch ein Abmelden des Nutzers an dem Computer und/oder ein Herunterfahren des Computers und/oder ein Entfernen des ID-Tokens aus der Kommunikationsreichweite des Terminals beendet. Im Falle einer kontaktbehafteten Kommunikation zwischen Terminal und ID-Token, d.h. erster und zweiter Kommunikationsschnittstelle, ist der ID-Token aus der Kommunikationsreichweite des Terminals entfernt, sobald der Kontakt zwischen den beiden Kommunikationsschnittstelle unterbrochen wird. Im Falle einer kontaktlosen Kommunikation zwischen Terminal und ID-Token, d.h. erster und zweiter Kommunikationsschnittstelle, definiert die Kommunikationsreichweite des Terminals einen Bereich, innerhalb dessen das vom Terminal ausgesandte Kommunikationssignal eine vordefinierte Mindestsignalstärke aufweist. Außerhalb der Kommunikationsreichweite ist die Signalstärke kleiner als die vordefinierte Mindestsignalstärke. Nach Ausführungsformen ist die Mindestsignalstärke diejenige Signalstärke, welche gerade ausreicht um den ID-Token und insbesondere einen flüchtigen Speicher des ID-Tokens mit ausreichend Energie für den Normalbetrieb zu versorgen. Fällt die Signalstärke unter die Mindestsignalstärke, reicht die Energie nicht mehr zur Versorgung des flüchtigen Speichers aus und die dort gespeicherten Daten werden aufgrund der resultierenden Unterbrechung und/oder Beendigung der Energieversorgung gelöscht.

Solange die Sitzung nicht beendet wird, steht das gemeinsame, geteilte Geheimnis somit als Sitzungsschlüssel zur Verfügung. Ausführungsformen können ferner den Vorteil haben, dass das gemeinsame, geteilte Geheimnis bei einer Speicherung in einem nicht-flüchtigen Speicher gespeichert bleibt, wenn bei einem Umschalten von einer ersten Kommunikationssitzung zu einer zweiten Kommunikationssitzung die Energieversorgung des ID-Tokens unterbrochen wird. Beispielsweise erfolgt eine Energieversorgung des ID-Tokens über ein Kommunikationssignal, welches der Computer an den ID-Token sendet. Erfolgt beispielsweise ein zeitverzögertes Umschalten zwischen zwei aufeinanderfolgend Kommunikationssitzungen, so werden die Energieversorgung in der Zeit zwischen diesen beiden Kommunikationssitzungen, in der keine Kommunikationssitzungen bestehen, keine Kommunikationssignale an den ID-Token gesendet, wodurch dessen Energieversorgung unterbrochen wird.

Nach Ausführungsformen ist das gemeinsame, geteilte Geheimnis auf Seiten des Computers in einem flüchtigen Speicher oder einem nicht-flüchtigen Speicher des ID-Tokens gespeichert.

Ausführungsformen können den Vorteil haben, dass das gemeinsame, geteilte Geheimnis bei einer Speicherung in einem flüchtigen Speicher automatisch gelöscht wird, wenn der Computer nach Beendigung einer Sitzung heruntergefahren wird.

Wird das gemeinsame, geteilte Geheimnis zumindest auf einer Seite, d.h. seitens des Computers oder des ID-Tokens, gelöscht, können die Kommunikationssitzungen nicht mehr ende-zu-end-verschlüsselt werden. Nach Ausführungsformen wird bei Auftreten eines Fehlers in der Ende-zu-End-Verschlüsselung die Kommunikation abgebrochen. Zudem wird nach Ausführungsformen bei einem Abbruch das gemeinsame, geteilte Geheimnis seitens des Computers und/oder des ID-Tokens gelöscht. Mithin wird jede weitere Kommunikation zwischen den Programmen und dem ID-Token unterbunden. Um erneut kommunizieren zu können muss ein neues gemeinsames, geteiltes Geheimnis erzeugt werden, d.h. es ist eine erneute vollständige Authentifizierung von ID-Token und Nutzer gegenüber dem Nutzerauthentifizierungsmodul notwendig. Durch ein zumindest einseitiges Löschen des gemeinsamen, geteilten Geheimnisses kann somit verhindert werden, dass ein ID-Token nach Beendigung einer Sitzung gestohlen und von einem unberechtigten Nutzer missbräuchlich verwendet wird.

Nach Ausführungsformen umfasst das Verfahren ferner:

- Empfangen eines Zertifikats von dem ID-Token, durch welches der ID-Token dem Nutzer kryptographisch gesichert zugeordnet ist,
- Verifizieren des Zertifikats,
- Festlegen des gegenüber den Programmen zu authentifizierenden Nutzers anhand des verifizierten Zertifikats.

Ausführungsformen können den Vorteil haben, dass keine Eingabe einer Nutzer-ID, wie etwa eines Nutzernamens (Username), notwendig ist. Nach Ausführungsformen können der Computer bzw. das erste Programm anhand des Zertifikats zudem prüfen, ob der dem Zertifikat zugeordnete Nutzer für das entsprechende Programm registriert bzw. für dessen Nutzung autorisiert ist.

Nach Ausführungsformen umfasst das Verfahren ferner: Empfangen einer Eingabe, welche den gegenüber den Programmen zu authentifizierenden Nutzer festlegt.

Ausführungsformen können den Vorteil haben, dass der Computer bzw. das erste Programm anhand der Eingabe prüfen kann, ob der entsprechende Nutzer für das entsprechende Programm registriert bzw. für dessen Nutzung autorisiert ist.

Nach Ausführungsformen umfasst der Computer eine Erfassungsvorrichtung zum Erfassen einer Kennung des Nutzers, wobei das Verfahren ferner umfasst:
Authentifizieren des Nutzers gegenüber dem ID-Token, wobei das Authentifizieren umfasst:

- Erfassen einer Kennung des Nutzers durch die Erfassungsvorrichtung des Computers,
- Verifizieren der erfassten Kennung unter Verwendung eines kryptographisch gesicherten Datenaustauschs zwischen Computer und ID-Token sowie eines in einem geschützten Speicherbereich des ID-Tokens gespeicherten Referenzwerts für die Kennung.

Ausführungsformen können den Vorteil haben, dass durch die Erfassung einer Kennung eine zwei Faktoren Authentifizierung realisiert wird, welche die Kennung und den ID-Token als Voraussetzung für eine erfolgreiche Authentifizierung umfasst. Nach Ausführungsformen erfolgt ein einmaliges Erfassen, wenn ein erstes Programm aufgerufen wird. Beispielsweise mittels Caching wird der Authentisierungsstatus an nachfolgende Programme kommuniziert, sodass der Nutzer nur einmalig eine Eingabe zur Authentifizierung tätigen muss.

Nach Ausführungsformen wird das aus der Authentisierung resultierende gemeinsame, geteilte Geheimnis gecacht bzw. gepuffert, so dass für jedes Programm das mittels Ende-zu-Ende-Verschlüsselung unter Verwendung des gemeinsamen, geteilten Geheimnisses mit der ID-Token kommuniziert vorausgesetzt werden kann, dass der Nutzer des ID-Tokens gültig authentisiert wurde. Denn nur unter dieser Voraussetzung konnte ein gültiges gemeinsames, geteiltes Geheimnis erzeugt werden, welches eine funktionierende Ende-zu-EndeVerschlüsselung ermöglicht. Schlägt die Ende-zu-Ende-Verschlüsselung fehl, ist dies ein Hinweis darauf, dass beispielsweise im Zuge der Authentisierung ein Fehler aufgetreten ist. In diesem Fall muss beispielsweise der Erzeugungsprozess des gemeinsamen, geteilten Geheimnisses inklusive Nutzerauthentisierung wiederholt werden.

Die Authentisierung des Nutzers gegenüber einem Programm umfasst somit vorliegend zum einen eine Authentisierung des ID-Tokens gegenüber dem Programm und eine Authentisierung des Nutzers gegenüber dem ID-Token. Die Nutzerauthentisierung kann vor oder nach der Authentisierung des ID-Tokens erfolgen. Erfolgt die Nutzerauthentisierung vor Authentisierung des ID-Tokens, so wird die Authentisierung des ID-Tokens nur unter der Voraussetzung einer erfolgreichen Nutzerauthentisierung ausgeführt. Somit ergibt sich aus einem gemeinsamen, geteilten Geheimnis, welches aus der Authentisierung des ID-Tokens resultiert, automatisch eine erfolgreiche Nutzerauthentisierung. Nach Ausführungsformen wird auf eine erfolgreiche Nutzerauthentisierung hin von dem ID-Token ein Statusflag erzeugt, in dem flüchtigen Speicher des ID-Tokens gespeichert und an das Nutzerauthentifizierungsmodul übermittelt. Das entsprechende Statusflag zeigt eine erfolgreiche Nutzerauthentisierung an.

Erfolgt die Nutzerauthentisierung nach Authentisierung des ID-Tokens, so wird von dem ID-Token auf eine erfolgreiche Nutzerauthentisierung hin ein Statusflag erzeugt, beispielsweise in dem flüchtigen Speicher des ID-Tokens gespeichert und an das Nutzerauthentifizierungsmodul übermittelt. Der empfangene Statusflag stellt das Nutzerauthentifizierungsmodul für die Programme bereit, sodass diese beispielsweise anhand des flüchtigen Speichers ableiten können, ob der Nutzer authentisiert wurde. Ebenso kann der ID-Token anhand des dort gespeicherten Statusflags ableiten, ob eine Nutzung durch einen authentisierten Nutzer vorliegt.

Nach Ausführungsformen erfolgt das Verifizieren der erfassten Kennung unter Verwendung des PACE-Protokolls.

Ausführungsformen können den Vorteil haben, dass ein sicheres Protokoll zum Verifizieren der erfassten Kennung bereitgestellt wird.

Nach Ausführungsformen wird im Zuge des Verifizierens der erfassten Kennung zusätzlich das gemeinsame, geteilte Geheimnis durch das PACE-Protokoll erzeugt.

Nach Ausführungsformen umfasst der ID-Token eine Erfassungsvorrichtung zum Erfassen einer Kennung des Nutzers, wobei das Verfahren ferner umfasst:

Authentifizieren des Nutzers gegenüber dem ID-Token, wobei das Authentifizieren umfasst:

- Erfassen einer Kennung des Nutzers durch die Erfassungsvorrichtung des ID-Tokens,
- Verifizieren der erfassten Kennung unter Verwendung eines in einem geschützten Speicherbereich des ID-Tokens gespeicherten Referenzwerts für die Kennung.

Ausführungsformen können den Vorteil haben, dass durch die Erfassung einer Kennung eine zwei Faktoren Authentifizierung realisiert wird, welche die Kennung und den ID-Token als Voraussetzung für eine erfolgreiche Authentifizierung umfasst. Nach Ausführungsformen sind in diesem Fall zur Authentifizierung keinerlei Dateneingaben durch den Nutzer am Computer notwendig. Insbesondere kann die Kennung direkt durch den ID-Token geprüft werden, ohne ein zusätzliches Protokoll zur indirekten Verifikation einer entfernt erfassten Kennung zu benötigen. Mithin ist das Verfahren dahingehend sicherer, dass die Anzahl möglicher Angriffspunkte für ein Ausspähen der Kennung reduziert wird.

Nach Ausführungsformen handelt es sich bei der Erfassungsvorrichtung des Computers und/oder des ID-Tokens um eine Tastatur und bei der Kennung um eine PIN handelt oder bei der Erfassungsvorrichtung um einen biometrischen Sensor und bei der Kennung um ein biometrisches Merkmal des Nutzers.

Ausführungsformen können den Vorteil haben, dass durch biometrische Merkmale, wie etwa Fingerabdrücke oder ein Frequenzmuster der Stimme, effizient geprüft werden kann, ob der tatsächliche Nutzers des ID-Tokens mit dem Nutzer übereinstimmt, welchem der ID-Token zugeordnet ist. Eine PIN prüft, ob der Nutzer über das notwendige Wissen zur rechtmäßigen Benutzung des ID-Tokens verfügt. Nach Ausführungsformen umfasst die Erfassungsvorrichtung einen oder mehrere Sensoren, wie einen Fingerabdrucksensor, ein PIN-Tastenfeld, oder Sensoren zur Erfassung von Umgebungsparameter, wie etwa einen Temperatursensor oder GPS-Empfänger. Nach Ausführungsformen handelt es sich bei der Erfassungsvorrichtung um eine Erfassungsvorrichtung zur Erfassung alternativer oder zusätzlicher Kennungen: Beschleunigungsdaten können beispielsweise zur Erkennung des Nutzers anhand von Bewegungsmustern dienen. Über die GPS-Koordinaten kann der Verwendungsort des ID Token bestimmt werden. Mittels der Temperatur lassen sich Umgebungsbedingungen überprüfen, um beispielsweis den tatsächlichen Ort der Verwendung des ID-Tokens zu bestimmen. Zudem lässt sich beispielsweise in Kombination mit einem Fingerabdrucksensor testen, ob bei der Erfassung der Messdaten tatsächlich ein Finger auf dem Sensor angeordnet ist.

Nach Ausführungsformen wird auf eine erfolgreiche Verifizierung der erfassten Kennung hin ein Statusflag der Nutzerauthentisierung durch den ID-Token gesetzt und eine Kommunikationssitzung zwischen einem Programme der Mehrzahl von Programmen und dem ID-Token nur unter der Voraussetzung einer positiven Prüfung des Statusflags ausgeführt.

Unter einem "Flag" wird hier ein Statusindikator verstanden, welcher zur Kennzeichnung eines bestimmten Zustands dient. Es handelt sich somit um eine gespeicherte Information, aus der sich der Status eindeutig ableiten lässt. Das Flag kann den entsprechenden Status beispielsweise durch sein Vorhandensein bzw. Nichtvorhandensein anzeigen und/oder explizit angeben, ob ein bestimmter Status vorliegt, und/oder einen vorliegenden Status explizit benennen. Das Flag kann beispielsweise durch eine Boolesche Variable, die binären Werte 0 und 1, explizite Angaben wie "Gesetzt" und "Nicht gesetzt" oder explizite Beschreibungen des Status realisiert sein. Ein Statusflag der Nutzerauthentisierung gibt an, ob die Nutzerauthentisierung war oder nicht.

Nach Ausführungsformen ist das Statusflag der Nutzerauthentisierung dem gemeinsamen, geteilten Geheimnis zugeordnet, sodass abgeleitet werden kann, ob für das gemeinsamen, geteilten Geheimnis eine erfolgreiche Nutzerauthentisierung erfolgt ist.

Eine positive Prüfung des in dem flüchtigen Speicher gespeicherten Statusflags ist eine Prüfung des Statusflag, welche das Ergebnis liefert, dass die Nutzerauthentisierung erfolgreich war.

Nach Ausführungsformen wird das Statusflag der Nutzerauthentisierung in dem flüchtigen Speicher oder dem nicht-flüchtigen Speicher des ID-Tokens gesetzt.

Ausführungsformen können den Vorteil haben, dass das Statusflag bei einer Speicherung in einem flüchtigen Speicher automatisch gelöscht wird, wenn nach Beendigung einer Sitzung, welche eine Mehrzahl von Kommunikationssitzungen umfasst hat, die Energieversorgung des flüchtigen Speichers unterbrochen wird. Eine Sitzung wird beispielsweise durch ein Abmelden des Nutzers an dem Computer und/oder ein Herunterfahren des Computers und/oder ein Entfernen des ID-Tokens aus der Kommunikationsreichweite des Terminals beendet. Solange die Sitzung nicht beendet wird, bleibt das Statusflag somit gesetzt. Ausführungsformen können ferner den Vorteil haben, dass das Statusflag bei einer Speicherung in einem nicht-flüchtigen Speicher gespeichert bleibt, wenn bei einem Umschalten von einer ersten Kommunikationssitzung zu einer zweiten Kommunikationssitzung die Energieversorgung des ID-Tokens unterbrochen wird. Beispielsweise erfolgt eine Energieversorgung des ID-Tokens über ein Kommunikationssignal, welches der Computer an den ID-Token sendet. Erfolgt beispielsweise ein zeitverzögertes Umschalten zwischen zwei aufeinanderfolgend Kommunikationssitzungen, so werden die Energieversorgung in der Zeit zwischen diesen beiden Kommunikationssitzungen, in der keine Kommunikationssitzungen bestehen, keine Kommunikationssignale an den ID-Token gesendet, wodurch dessen Energieversorgung unterbrochen wird.

Nach Ausführungsformen umfasst das Verfahren ferner:

- Empfangen des Statusflags durch das Nutzerauthentifizierungsmodul,
- Verwalten des Statusflags durch das Nutzerauthentifizierungsmodul zusammen mit dem gemeinsamen, geteilten Geheimnis, sodass das Statusflags auf eine Auswahl eines der Programme der Mehrzahl von Programmen hin zusammen mit dem gemeinsamen, geteilten Geheimnisse durch das Nutzerauthentifizierungsmodul für das entsprechende Programm bereitgestellt wird und eine Kommunikationssitzung zwischen dem entsprechenden Programm und dem ID-Token nur unter der Voraussetzung einer positiven Prüfung des bereitgestellten Statusflags ausgeführt wird.

Nach Ausführungsformen wird das empfangene Statusflag der Nutzerauthentisierung in dem flüchtigen Speicher oder dem nicht-flüchtigen Speicher des Computers gesetzt.

Ausführungsformen können den Vorteil haben, dass das Statusflag bei einer Speicherung in einem flüchtigen Speicher automatisch gelöscht wird, wenn der Computer nach Beendigung einer Sitzung heruntergefahren wird.

Wird das Statusflag zumindest auf einer Seite, d.h. seitens des Computers oder des ID-Tokens, gelöscht, kann eine Prüfung des Statusflags kein positives Ergebnis mehr liefern. Mithin werden keine Kommunikationssitzung zwischen der Mehrzahl von Programmen und dem ID-Token mehr ausgeführt. Nach Ausführungsformen wird bei Auftreten eines Fehlers in der Ende-zu-End-Verschlüsselung und/oder einer negativen Prüfung des Statusflags die Kommunikation abgebrochen. Zudem wird nach Ausführungsformen bei einem Abbruch das Statusflag seitens des Computers und/oder des ID-Tokens gelöscht. Mithin wird jede weitere Kommunikation zwischen den Programmen und dem ID-Token unterbunden. Um erneut kommunizieren zu können muss ein neues Statusflag erzeugt werden, d.h. es ist eine erneute Authentifizierung des Nutzers notwendig. Durch ein zumindest einseitiges Löschen des Statusflags kann somit verhindert werden, dass ein ID-Token nach Beendigung einer Sitzung gestohlen und von einem unberechtigten Nutzer missbräuchlich verwendet wird.

Nach Ausführungsformen wird das Statusflag der Nutzerauthentisierung von dem Nutzerauthentifizierungsmodul in der Form empfangen, in der es im nicht-flüchtigen Speicher des ID-Tokens gespeichert ist. Nach alternativen Ausführungsformen wird von dem Nutzerauthentifizierungsmodul eine Information empfangen, aus welcher sich das in dem ID-Token gespeicherte Statusflag der Nutzerauthentisierung eindeutig ableiten lässt.

Nach Ausführungsformen erfolgt eine Übertragung des Statusflags von dem ID-Token an das Nutzerauthentifizierungsmodul durch Ausführen eines Request-Response-Protokolls, bei dem das Nutzerauthentifizierungsmodul den Status der Nutzerauthentisierung bei dem ID-Token abfragt und das ID-Token als dem Nutzerauthentifizierungsmodul als Antwort den Status der Nutzerauthentisierung mitteilt.

Nach Ausführungsformen umfasst der ID-Token ein statisches asymmetrisches Schlüsselpaar, welches einen statischen privaten und einen statischen öffentlichen Schlüssel aufweist, wobei der statische private Schlüssel in einem geschützten Speicherbereich des ID-Tokens gespeichert ist. Das Verfahren umfasst ferner ein Erzeugen des gemeinsamen, geteilten Geheimnisses. Das Erzeugen des gemeinsamen, geteilten Geheimnisses umfasst:

- Senden des statischen öffentlichen Schlüssels an das Nutzerauthentifizierungsmodul,
- Erzeugen eines ephemeren asymmetrisches Schlüsselpaar durch das Nutzerauthentifizierungsmodul, wobei das erzeugte asymmetrische Schlüsselpaar einen ephemeren privaten und einen ephemeren öffentlichen Schlüssel aufweist,
- Senden des ephemeren öffentlichen Schlüssels an den ID-Token,
- Berechnen des gemeinsamen, geteilten Geheimnisses durch den ID-Token unter Verwendung des statischen privaten Schlüssels und des ephemeren öffentlichen Schlüssels,
- Speichern des gemeinsamen, geteilten Geheimnisses durch den ID-Token,
- Berechnen des gemeinsamen, geteilten Geheimnisses durch das Nutzerauthentifizierungsmodul unter Verwendung des ephemeren privaten Schlüssels und des statischen öffentlichen Schlüssels,
- Verwalten des gemeinsamen, geteilten Geheimnisses durch das Nutzerauthentifizierungsmodul.

Ausführungsformen können den Vorteil haben, dass ein effizientes und sicheres Verfahren zum Erzeugen des gemeinsamen, geteilten Geheimnisses bereitgestellt wird.

Der ID-Token authentifiziert sich beispielsweise mit dem Chip-Authentisierungs-Protokoll gegenüber dem Nutzerauthentifizierungsmodul und etabliert dabei einen sicheren Kanal. In dem ID-Token werden die zur Absicherung des Kanals verwendeten kryptographischen Schlüssel und/oder daraus abgeleiteter Werte solange in deren transientem Speicher gespeichert, solange die Karte eingeschaltet ist. Eine Konkatenierung der zur Absicherung des Kanals verwendeten kryptographischen Schlüssel und/oder daraus abgeleiteter Werte wird an alle weiteren Programme zur Authentisierung des Nutzer zur Verfügung gestellt bzw. die CA stellt einen Single-Sign-on-Prozess dar. Bei einem Single-Sign-on-Prozess ermöglicht eine einmalige Authentifizierung einem Nutzer an einem Arbeitsplatz auf alle Rechner und Dienste, für die er lokal berechtigt ist, am selben Arbeitsplatz zugreifen kann, ohne sich jedes Mal neu anmelden zu müssen. Wechselt der Nutzer den Arbeitsplatz, wird die Authentifizierung, wie auch die lokale Berechtigung, hinfällig.

Nach Ausführungsformen erfolgt das Berechnen des gemeinsamen, geteilten Geheimnisses im Zuge eine Chip Authentisierung des ID-Tokens. Die Chip Authentisierung ("Chip Authentication", CA) dient dazu, eine gesicherte Verbindung zwischen einem ID-Token und dem Terminal aufzubauen. Insbesondere dient sie dazu "geklonte" ID-Token aufzudecken.

Der ID-Token umfasst ein zugeordnetes asymmetrisches Schlüsselpaar, welches einen privaten und einen öffentlichen Schlüssel umfasst. Der private Schlüssel ist in einem gesicherten Speicherbereich des ID-Token gespeichert, aus dem er nicht ausgelesen werden kann. Nach Ausführungsformen ist es nicht möglich den geheimen Schlüssel mit zu "klonen", d.h. mit zu kopieren, selbst auch wenn der komplette ID-Token geklont wird.

Bei der Chip Authentisierung wird der öffentliche Schlüssel zusammen mit einer Zufallszahl an das Terminal und/oder das Nutzerauthentifizierungsmodul geschickt. Das Terminal und/oder das Nutzerauthentifizierungsmodul erzeugt bei jedem Lesevorgang eines ID-Tokens ein eigenes, d.h. dem Terminal und/oder das Nutzerauthentifizierungsmodul zugeordnetes, ephemeres asymmetrisches Schlüsselpaar, bestehend aus einem öffentlichen und einem geheimen Schlüssel. Das Terminal und/oder das Nutzerauthentifizierungsmodul schickt seinen ephemeren öffentlichen Schlüssel an den ID-Token. Aus dem jeweiligen eigenen privaten Schlüssel können der ID-Token ebenso wie das Terminal und/oder das Nutzerauthentifizierungsmodul jeweils dasselbe gemeinsame, geteilte Geheimnis bzw. denselben auf einem gemeinsame, geteilte Geheimnis basierenden geheimen Schlüssels unter Verwendung des öffentlichen Schlüssels der jeweils anderen Komponente, d.h. des Terminals und/oder des Nutzerauthentifizierungsmoduls bzw. des ID-Tokens, sowie der Zufallszahl berechnen. Dieser geheime Schlüssel wird in der weiteren Kommunikation zwischen ID-Token und Terminal bzw. Nutzerauthentifizierungsmodul zur Verschlüsselung der übertragenen Daten verwendet. Beispielsweise wird der geheime Schlüssel zur Ausbildung eines mittels Ende-zu-Ende-Verschlüsselung abgesicherten Übertragungskanal verwendet.

Das CA Protokoll basiert beispielsweise auf einem ephemer-statischen Diffie-Hellman Schlüsselerzeugungsprotokoll und stellt eine sichere Kommunikation sowie unilaterale Authentisierung eines ID-Tokens.

Nach Ausführungsformen wird das gemeinsame, geteilte Geheimnis und/oder der darauf basierende geheime Schlüssel einmal im Zuge der CA berechnet und anschließend einer Mehrzahl von Programmen zur Authentisierung des ID-Tokens und/oder Nutzers bereitgestellt. Auf eine erfolgreiche Nutzerauthentisierung kann auf Basis des gemeinsamen, geteilten Geheimnisses und/oder der darauf basierende geheimen Schlüssel geschlossen werden, falls eine zuvor erfolgreich ausgeführte Nutzerauthentisierung eine zwingende Voraussetzung für die Erzeugung des gemeinsamen, geteilten Geheimnisses und/oder der darauf basierende geheimen Schlüssel ist.

Mit Hilfe des gemeinsamen, geteilten geheimen Schlüssels, d.h. eines symmetrischen Schlüssels, kann das Lesegerät und/oder das Nutzerauthentifizierungsmodul prüfen, ob der ID-Token den richtigen privaten Schlüssel umfasst. Ein geklonter ID-Token hat keinen Zugriff auf den richtigen privaten Schlüssel. Bei Verwendung eines anderen privaten Schlüssels ergibt sich ein falsches gemeinsames Passwort, d.h. gemeinsamer, geteilter geheimer Schlüssel.

Wenn für einen geklonten ID-Token ein neues Schlüsselpaar erzeugt wird, fällt dies bei einer passiven Authentisierung auf, da der öffentliche Schlüssel des asymmetrischen Schlüsselpaars durch eine digitale Signatur gegen unbemerkte Veränderungen geschützt ist. Nach Ausführungsformen wird hierzu ein entsprechendes Zertifikat von dem ID-Token an das Terminals und/oder Nutzerauthentifizierungsmodul übertragen.

Nach Ausführungsformen erfolgt die CA vor der Nutzerauthentisierung, wobei das gemeinsame, geteilte Geheimnis zur kryptographischen Sicherung des Datenaustauschs zwischen Computer und ID-Token im Zuge der Nutzerauthentisierung verwendet wird. Auf eine erfolgreiche Nutzerauthentisierung hin wird ein Statusflag der Nutzerauthentisierung erzeugt und über die kryptographischen gesicherte Verbindung an das Nutzerauthentifizierungsmodul übertragen. Nach Ausführungsformen erfolgt die Übertragung des Statusflags in Antwort auf eine Statusabfrage durch das Nutzerauthentifizierungsmodul.

Ausführungsformen können den Vorteil haben, dass die Bestätigung einer erfolgreichen Nutzerauthentisierung in einem geschützten Kanal mittels einer einfachen Abfrage ohne zusätzliche aufwendige kryptografische Verfahren erfolgen kann. Das Nutzerauthentifizierungsmodul stellt das Statusflag der Nutzerauthentisierung den Programmen der gemeinsamen Sicherheitsdomäne bereit, sodass diese prüfen können, ob eine erfolgreiche Nutzerauthentisierung vorliegt.

Nach Ausführungsformen führt jedes Programm einen neuen Durchlauf der CA durch.

Nach Ausführungsformen werden bei der Herstellung des ID-Tokens die darin gespeicherten Daten mittels eines Zertifikats einer Dokumenten-PKI digital signiert zum Nachweis der Unverfälschtheit der entsprechenden Daten.

Beim Lesen des ID-Tokens wird mittels der Passiven Authentisierung die Signatur der in dem ID-Token gespeicherten Daten geprüft und die Dokumenten-PKI überprüft. So kann festgestellt werden, ob die Daten im ID-Token von einer zulässigen Autorität gespeichert wurden und ob diese unverfälscht sind.

Eine Infrastruktur für öffentliche Schlüssel ("Public Key Infrastructure", PKI) stellt eine Hierarchie von digitalen Zertifikaten bereit. Das Prinzip einer PKI basiert auf der asymmetrischen Verschlüsselung. Bei der asymmetrischen Verschlüsselung wird für jeden Teilnehmer einer verschlüsselten Kommunikation ein kryptographisches Schlüsselpaar erstellt. Dieses besteht jeweils aus einem privaten bzw. geheimen und einem öffentlichen Schlüssel. Diese werden so generiert, dass eine Datei, die mit dem öffentlichen Schlüssel verschlüsselt wurde, nur mit dem zugehörigen privaten Schlüssel entschlüsselt werden kann. Außerdem ist es mit demselben privaten Schlüssel möglich, eine Datei digital zu signieren. Mit dem zugehörigen öffentlichen Schlüssel kann dann geprüft werden, ob die Datei seit der Signatur unverändert ist.

Das entsprechendes digitales Zertifikat des ID-Tokens umfasst den öffentlichen Schlüssel eines solchen asymmetrischen Schlüsselpaares und zudem weitere Angaben, wie z.B. den Aussteller des Zertifikats, den Inhaber des Zertifikats, d.h. den Besitzer des passenden privaten Schlüssels und sowie einen Gültigkeitszeitraum. Wenn zwei Kommunikationspartner einander sicher Nachrichten übermitteln möchten, tauschen sie ihre Zertifikate aus. Damit erhalten sie die Möglichkeit, Nachrichten mittels des empfangenen öffentlichen Schlüssels des jeweils anderen Kommunikationspartners so zu verschlüsseln, dass die Nachrichten nur der jeweils andere Kommunikationspartner mit seinem privaten Schlüssel entschlüsseln kann. Zusätzlich können sie auch die digitale Signatur des jeweils anderen Kommunikationspartners überprüfen.

Um den Austausch von Zertifikaten zu vereinfachen und auch dann zu ermöglichen, wenn die Kommunikationspartner sich vorher nicht persönlich kennen, werden nach Ausführungsformen so genannte Public Key Infrastructures oder Public Key Infrastrukturen gebildet.

Bei einer Public Key Infrastructure, also einer Hierarchie von Zertifikaten, wird ein Wurzelzertifikat (Root-Zertifikat) mit zugehörigem Schlüsselpaar bei einer für alle Teilnehmer vertrauenswürdigen Stelle, einer so genannten Zertifikats-Autorität (Certificate Authority) erstellt. Dieses Wurzelzertifikat kann als Vertrauensanker benutzt werden. Weitere Zertifikate in dieser PKI werden mit dem zum Wurzelzertifikat gehörigen privaten Schlüssel signiert. Eine solche Signatur für ein Zertifikat wird nur dann ausgegeben, wenn alle von der Zertifikats-Autorität festgelegten Anforderungen erfüllt wurden. Diese beinhalten unter anderem einen Nachweis über die Identität desjenigen, der das Zertifikat nutzen möchte und dass der Identifizierte den privaten Schlüssel sicher speichert.

Nicht jedes Zertifikat einer PKI muss mit dem privaten Schlüssel des Wurzelzertifikats signiert werden. Nach Ausführungsformen können es auch private Schlüssel verwendet werden, deren zugehörige Zertifikate mit dem privaten Schlüssel des Wurzelzertifikats signiert wurden. Theoretisch kann eine solche Kette beliebig lang werden, wobei die Kette nur immer beim Wurzelzertifikat beginnen muss. Für die Prüfung der Echtheit und Vertrauenswürdigkeit eines Zertifikats aus einer PKI müssen nach Ausführungsformen alle Zertifikate, die zwischen dem zu prüfenden Zertifikat und der Wurzelzertifikat liegen, verifiziert werden.

Nach Ausführungsformen wird das Nutzerauthentifizierungsmodul in Form einer Middleware oder als Teil eines Betriebssystems des Computers bereitgestellt.

Ausführungsformen können den Vorteil haben, dass sie eine effiziente Integration des Nutzerauthentifizierungsmoduls in Infrastruktur des Computers ermöglichen.

Middleware bezeichnet vorliegende ein anwendungsneutrales Programm, welches zwischen Anwendungsprogrammen vermittelt. Sie stellt eine Verteilungsplattform bereit, d.h. ein Protokoll (oder Protokollbündel) auf einer höheren Schicht als jener der gewöhnlichen Rechnerkommunikation, wobei Middleware die Kommunikation zwischen Prozessen, d.h. Anwendungsprogrammen, unterstützt. Middleware stellt eine Ebene in einem komplexen Softwaresystem dar, die als Dienstleister anderen ansonsten entkoppelten Softwarekomponenten den Datenaustausch ermöglicht. Middleware organisiert beispielsweise den Transport komplexer Daten, vermittelt Funktionsaufrufe zwischen Komponenten bzw. Anwendungsprogrammen und stellt Transaktionssicherheit über ansonsten unabhängige Teilsysteme her. Middleware bildet dabei eine zusätzliche Schicht zwischen Anwendungsprogrammen und einem Betriebssystem.

Nach Ausführungsformen umfasst das Verfahren ferner: auf ein Logout-Kommando hin Löschen des gemeinsamen, geteilten Geheimnisses und/oder des Statusflags auf Seiten des Computers und/oder Senden eines Löschkommandos zum Löschen des gemeinsamen, geteilten Geheimnisses und/oder des Statusflags an den ID-Token.

Ausführungsformen können den Vorteil haben, dass durch ein zumindest einseitiges Löschen des gemeinsamen, geteilten Geheimnisses und/oder des Statusflags nach einem Logout-Kommando, durch welches die Sitzung beendet wird, keine weitere Kommunikationssitzungen mehr ausgeführt werden können. Zum Ausführen weiterer Kommunikationssitzungen ist somit ein Erzeugen eines neuen gemeinsamen, geteilten Geheimnisses und/oder des Statusflags notwendig, was eine erneute Authentifizierung erfordert. Durch Löschen des gemeinsamen, geteilten Geheimnisses und/oder des Statusflags kann somit effizient verhindert werden, dass ein ID-Token nach einem Logout gestohlen und von einem unberechtigten Nutzer missbräuchlich verwendet wird, selbst wenn das gemeinsame, geteilte Geheimnis und/oder das Statusflag in einem nicht-flüchtigen Speicher gespeichert ist.

Ist das gemeinsamen, geteilten Geheimnis und/oder das Statusflag in einem flüchtigen Speicher des ID-Tokens gespeichert, erfolgt ein Löschen nach Ausführungsformen beispielsweise durch Entfernen des ID-Tokens aus der Kommunikationsreichweite des Terminals.

Nach Ausführungsformen bleibt das gemeinsame, geteilte Geheimnis und/oder das Statusflag bei einem Umschalten von einer Kommunikationssitzung zu einer anderen Kommunikationssitzung in dem flüchtigen Speicher oder dem nicht-flüchtigen Speicher des ID-Tokens gespeichert.

Ausführungsformen können den Vorteil haben, dass das gemeinsame, geteilte Geheimnis für eine Mehrzahl von Programmen genutzt werden und somit eine Nutzerauthentifizierung bereitstellen kann. Kann es bei einem Umschalten von einer Kommunikationssitzung zu einer anderen Kommunikationssitzung im fehlerfreien Betrieb des ID-Tokens zu einer Unterbrechung der Energieversorgung des flüchtigen Speichers des ID-Tokens kommen, wird das gemeinsame, geteilte Geheimnis und/oder das Statusflag vorzugsweise in dem nicht-flüchtigen Speicher des ID-Tokens gespeichert. Kann es bei einem Umschalten von einer Kommunikationssitzung zu einer anderen Kommunikationssitzung im fehlerfreien Betrieb des ID-Tokens zu keiner Unterbrechung der Energieversorgung des flüchtigen Speichers des ID-Tokens kommen, wird das gemeinsame, geteilte Geheimnis und/oder das Statusflag vorzugsweise in dem flüchtigen Speicher des ID-Tokens gespeichert. Letzteres kann den weiteren Vorteil haben, dass bei einer Beendigung der Sitzung das gemeinsame, geteilte Geheimnis und/oder das Statusflag aufgrund einer Beendigung der Energieversorgung des flüchtigen Speichers gelöscht werden.

Nach Ausführungsformen umfasst der ID-Token keine autarke Energieversorgung, sondern wird von dem Terminal kontaktlos mit Energie versorgt, wobei der ID-Token den flüchtigen Speicher derart verwaltet, dass das gemeinsame, geteilte Geheimnisse und/oder das Statusflag nur durch eine Unterbrechung der Energieversorgung des ID-Tokens durch das Terminal gelöscht wird. Nichtdestotrotz kann der ID-Token Vorrichtungen zur kurzzeitigen Zwischenspeicherung von elektrischer Energie, welche beispielsweise von dem Terminal übertragen wird, umfassen, wie etwa einen Pufferkondensator.

Der ID-Token verfügt nach Ausführungsformen beispielsweise über keine Batterie, Akkumulator oder Vorrichtung zur autarken Erzeugung elektrischer Energie aus Umgebungstemperatur, Vibrationen, Luftströmungen, Licht, Osmose etc.

Ausführungsformen können den Vorteil haben, dass das gemeinsame, geteilte Geheimnis keinen permanenten Datenwert darstellt, wodurch die Sicherheit erhöht wird. Nachdem das gemeinsame, geteilte Geheimnis seitens des ID-Tokens gelöscht wurde, kann es nicht mehr für eine Kommunikation zwischen Computer und ID-Token genutzt werden, bzw. zu keiner Nutzerauthentifizierung mehr beitragen.

Nach Ausführungsformen umfasst das Verfahren ferner:

- Berechnen einer Zufallszahl durch den ID-Token,
- Berechnen zweier symmetrischer kryptographischer Schlüssel durch den ID-Token unter Verwendung des gemeinsamen, geteilten Geheimnisses und der Zufallszahl, wobei ein erster der beiden symmetrischen Schlüssel zum Verschlüsseln von zu übertragenden Daten vorgesehen ist und wobei ein zweiter der beiden symmetrischen Schlüssel zum Authentifizieren der verschlüsselten Daten vorgesehen ist,
- Speichern der beiden symmetrischen kryptographischen Schlüssel durch den ID-Token,
- Berechnen eines Authentifizierungstoken durch den ID-Token unter Verwendung eines der beiden symmetrischen Schlüssel und des ephemeren öffentlichen Schlüssels,
- Senden des Authentifizierungstoken zusammen mit der Zufallszahl an das Nutzerauthentifizierungsmodul.

Nach Ausführungsformen werden die beiden symmetrischen kryptographischen Schlüssel in dem flüchtigen Speicher oder dem nicht-flüchtigen Speicher des ID-Tokens gespeichert.

Ausführungsformen können den Vorteil haben, dass die beiden symmetrischen kryptographischen Schlüssel bei einer Speicherung in einem flüchtigen Speicher automatisch gelöscht werden, wenn nach Beendigung einer Sitzung, welche eine Mehrzahl von Kommunikationssitzung umfasst hat, die Energieversorgung des flüchtigen Speichers unterbrochen wird. Eine Sitzung wird beispielsweise durch ein Abmelden des Nutzers an dem Computer und/oder ein Herunterfahren des Computers und/oder ein Entfernen des ID-Tokens aus der Kommunikationsreichweite des Terminals beendet. Solange die Sitzung nicht beendet wird, stehen die beiden symmetrischen kryptographischen Schlüssel somit als Sitzungsschlüssel zur Verfügung. Ausführungsformen können ferner den Vorteil haben, dass die beiden symmetrischen kryptographischen Schlüssel bei einer Speicherung in einem nicht-flüchtigen Speicher gespeichert bleiben, wenn bei einem Umschalten von einer ersten Kommunikationssitzung zu einer zweiten Kommunikationssitzung die Energieversorgung des ID-Tokens unterbrochen wird. Beispielsweise erfolgt eine Energieversorgung des ID-Tokens über ein Kommunikationssignal, welches der Computer an den ID-Token sendet. Erfolgt beispielsweise ein zeitverzögertes Umschalten zwischen zwei aufeinanderfolgend Kommunikationssitzungen, so werden die Energieversorgung in der Zeit zwischen diesen beiden Kommunikationssitzungen, in der keine Kommunikationssitzungen bestehen, keine Kommunikationssignale an den ID-Token gesendet, wodurch dessen Energieversorgung unterbrochen wird.

Nach Ausführungsformen umfasst das Verfahren ferner:

- Berechnen der beiden symmetrischen kryptographischen Schlüssel durch das Nutzerauthentifizierungsmodul unter Verwendung des gemeinsamen, geteilten Geheimnisses und der übertragenen Zufallszahl,
- Verifizieren des übertragenen Authentifizierungstoken durch das Nutzerauthentifizierungsmodul unter Verwendung eines der beiden symmetrischen Schlüssel und des ephemeren öffentlichen Schlüssels.

Ausführungsformen können den Vorteil haben, dass effizient sichergestellt werden kann, dass das Nutzerauthentifizierungsmodul und der ID-Token dasselbe gemeinsame, geteilte Geheimnis berechnet haben, d.h. dass es sich bei dem Geheimnis tatsächlich um ein gemeinsames und geteiltes Geheimnis handelt.

Nach Ausführungsformen werden die beiden symmetrischen kryptographischen Schlüssel in dem flüchtigen Speicher oder dem nicht-flüchtigen Speicher des Computers gespeichert.

Ausführungsformen können den Vorteil haben, dass die beiden symmetrischen kryptographischen Schlüssel bei einer Speicherung in einem flüchtigen Speicher automatisch gelöscht werden, wenn der Computer nach Beendigung einer Sitzung heruntergefahren wird.

Werden die beiden symmetrischen kryptographischen Schlüssel zumindest auf einer Seite, d.h. seitens des Computers oder des ID-Tokens, gelöscht, können die Kommunikationssitzungen nicht mehr ende-zu-end-verschlüsselt werden. Nach Ausführungsformen wird bei Auftreten eines Fehlers in der Ende-zu-End-Verschlüsselung die Kommunikation abgebrochen. Zudem werden nach Ausführungsformen bei einem Abbruch die beiden symmetrischen kryptographischen Schlüssel und/oder das gemeinsame, geteilte Geheimnis seitens des Computers und/oder des ID-Tokens gelöscht. Mithin wird jede weitere Kommunikation zwischen den Programmen und dem ID-Token unterbunden. Um erneut kommunizieren zu können müssen zwei neue symmetrische kryptographische Schlüssel und/oder ein neues gemeinsames, geteiltes Geheimnis erzeugt werden. Durch ein zumindest einseitiges Löschen des gemeinsamen, geteilten Geheimnisses kann somit verhindert werden, dass ein ID-Token nach Beendigung einer Sitzung gestohlen und von einem unberechtigten Nutzer missbräuchlich verwendet wird.

Nach Ausführungsformen umfasst das Verfahren ferner: auf ein Logout-Kommando hin Löschen der beiden symmetrischen kryptographischen Schlüssel auf Seiten des Computers und/oder Senden eines Löschkommandos zum Löschen der beiden symmetrischen kryptographischen Schlüssel an den ID-Token.

Ausführungsformen können den Vorteil haben, dass durch ein zumindest einseitiges Löschen der beiden symmetrischen kryptographischen Schlüssel nach einem Logout-Kommando, durch welches die Sitzung beendet wird, keine weitere Kommunikationssitzungen mehr ausgeführt werden können. Zum Ausführen weiterer Kommunikationssitzungen ist somit ein Erzeugen zweier neuer symmetrischer kryptographischer Schlüssel notwendig. Durch Löschen der beiden symmetrischen kryptographischen Schlüssel kann somit verhindert werden, dass ein ID-Token nach einem Logout gestohlen und von einem unberechtigten Nutzer missbräuchlich verwendet wird, selbst wenn die beiden symmetrischen kryptographischen Schlüssel in einem nicht-flüchtigen Speicher gespeichert sind.

Sind die beiden symmetrischen kryptographischen Schlüssel in einem flüchtigen Speicher des ID-Tokens gespeichert, erfolgt ein Löschen nach Ausführungsformen beispielsweise durch Entfernen des ID-Tokens aus der Kommunikationsreichweite des Terminals.

Nach Ausführungsformen stellt das Nutzerauthentifizierungsmodul das gemeinsame, geteilte Geheimnis für die Mehrzahl von Programmen in Form der beiden symmetrischen kryptographischen Schlüssel bereit.

Ausführungsformen können den Vorteil haben, dass nach einer einmaligen Berechnung der beiden symmetrischen kryptographischen Schlüssel keine zusätzlichen Berechnungsschritte für die einzelnen Programme mehr notwendig sind.

Nach Ausführungsformen stellt das Nutzerauthentifizierungsmodul die übertragene Zufallszahl für die Mehrzahl von Programmen bereit. Das Verfahren umfasst ferner: Berechnen der beiden symmetrischen kryptographischen Schlüssel durch eines der Programme unter Verwendung des gemeinsamen, geteilten Geheimnisses und der übertragenen Zufallszahl, welche von dem Nutzerauthentifizierungsmodul bereitgestellt werden.

Ausführungsformen können den Vorteil haben, dass nur berechtigte Programme bei Bedarf die symmetrischen kryptographischen Schlüssel berechnen.

Nach Ausführungsformen berechnet der ID-Token für das zweite Programm zwei neue symmetrische kryptographische Schlüssel unter Verwendung einer neuen Zufallszahl und ein neues Authentifizierungstoken unter Verwendung eines der neuen symmetrischen Schlüssel und des ephemeren öffentlichen Schlüssels. Der ID-Token sendet das neue Authentifizierungstoken sowie die neue Zufallszahl an den Computer. Ferner umfasst das Verfahren: Berechnen der beiden neuen symmetrischen kryptographische Schlüssel durch das zweite Programm und/oder das Nutzerauthentifizierungsmodul unter Verwendung des gemeinsamen, geteilten Geheimnisses und der neuen übertragenen Zufallszahl, welche von dem Nutzerauthentifizierungsmodul bereitgestellt werden.

Ausführungsformen können den Vorteil haben, dass durch die Verwendung unterschiedlicher Zufallszahlen und damit unterschiedlicher symmetrischer kryptographischer Schlüssel die Sicherheit erhöht wird.

Nach Ausführungsformen umfasst das Verfahren ferner: Zurücksetzen eines internen Zustands des ID-Tokens, welcher dem ersten Programm zugeordnet ist, auf einen vorbestimmten Anfangszustand beim Umschalten von der ersten Kommunikationssitzung auf die zweite Kommunikationssitzung.

Ausführungsformen können den Vorteil haben, dass eine Nutzung der aus dem gemeinsamen geteilten Geheimnis berechneten Schlüssel durch alle Programme der Mehrzahl von Programmen ermöglicht wird, auch wenn die Programme untereinander nicht kommunizieren und keine geteilten Zustände halten können.

Mit dem gemeinsamen, geteilten Geheimnis und/oder daraus abgeleiteten Werten kann jedes der Programme auf den ID-Token zugreifen, wobei bei einem neuen Zugriff flüchtige Daten in der Karte wie beispielsweise ein Send-Sequence-Counter oder andere interne Zustände implizit, d.h. automatisch, oder explizit, d.h. auf einen übertragenen Befehl hin, zurückgesetzt werden.

Nach Ausführungsformen umfasst das Verfahren ferner:

- Protokollieren eines Zustands des ID-Tokens durch das Nutzerauthentifizierungsmodul,
- Programmübergreifendes Bereitstellen des protokollierten Zustands des ID-Tokens für die Mehrzahl von Programmen durch das Nutzerauthentifizierungsmodul.

Ausführungsformen können den Vorteil haben, dass interne unkritische Zustände, wie der Send Sequence Counter, zentral gespeichert werden können, sodass alle Programme darauf Zugriff haben und die internen Zustände somit geteilt genutzt werden können. Eine solche Nutzung des Send Sequence Counters bietet insbesondere Schutz vor einem Replayangriff.

Nach Ausführungsformen legt das Nutzerauthentifizierungsmodul im Falle einer simultanen Auswahl von mehr als einem der Programme eine Reihenfolge fest, in der Kommunikationssitzungen zwischen den einzelnen Programmen und dem ID-Token ausgeführt werden.

Ausführungsformen können den Vorteil haben, dass das eine effiziente Verwaltung und Steuerung der Kommunikationssitzungen ermöglicht wird.

Nach Ausführungsformen wandelt das Nutzerauthentifizierungsmodul Befehle von der Mehrzahl von Programmen an den ID-Token in Chipkartenbefehle gemäß einer Befehlssyntax eines Chipkartenbetriebssystems und Chipkartenbefehle des ID-Tokens an die Programme in Befehle gemäß einer Befehlssyntax eines Betriebssystems des Computers um.

Ausführungsformen können den Vorteil haben, dass das ID-Token ein Chipkartenbetriebssystem umfassen und durch das Nutzerauthentifizierungsmodul zugleich eine effiziente Kommunikation mit dem Computer und den Programmen ermöglicht wird, wobei der Computer ein Computerbetriebssystem, wie etwa Linux, Windows oder OS X, umfasst.

Nach Ausführungsformen bilden das Nutzerauthentifizierungsmodul ein erstes Ende und der ID-Token ein zweites Ende eines ende-zu-ende-verschlüsselten Übertragungskanals zum Datenaustausch zwischen den einzelnen Programmen und dem ID-Token.

Ausführungsformen können den Vorteil haben, dass eine sichere Datenübertragung ermöglicht wird.

Nach Ausführungsformen bilden die Programme jeweils ein erstes Ende und der ID-Token ein zweites Ende eines ende-zu-ende-verschlüsselten Übertragungskanals zum Datenaustausch zwischen dem entsprechenden Programm und dem ID-Token.

Ausführungsformen können den Vorteil haben, dass eine sichere Datenübertragung ermöglicht wird.

Nach Ausführungsformen ist die erste Kommunikationsschnittstelle des Terminals zur kontaktlosen Kommunikation mit dem ID-Token und die zweite Kommunikationsschnittstelle des ID-Tokens zur kontaktlosen Kommunikation mit dem Terminal konfiguriert.

Ausführungsformen umfassen ferner einen ID-Token zum Authentifizieren eines Nutzers gegenüber einer Mehrzahl von Programmen derselben Sicherheitsdomäne. Der ID-Token ist dem Nutzer kryptographisch gesichert zugeordnet. Der ID-Token umfasst eine Kommunikationsschnittstelle zur kontaktlosen Kommunikation mit einem an einen Computer gekoppeltes Terminal. Der ID-Token umfasst ein mit dem Computer gemeinsames, geteiltes Geheimnis. Das gemeinsame, geteilte Geheimnis ist dazu vorgesehen, Kommunikationssitzungen zwischen den einzelnen Programmen und dem ID-Token jeweils durch eine Ende-zu-Ende-Verschlüsselung zu schützen. Der ID-Token ist dazu konfiguriert, das gemeinsame, geteilte Geheimnis bei einem Umschalten von einer der Kommunikationssitzungen zur anderen in dem flüchtigen Speicher beizubehalten. Der ID-Token ist zum Ausführen des Verfahrens nach einem der vorhergehenden Ansprüche konfiguriert. Ausführungsformen sind dazu konfiguriert im Betrieb einzeln oder in Kombination miteinander alle zuvor beschriebenen Verfahren auszuführen.

Ausführungsformen umfassen ferner ein Nutzerauthentifizierungsmodul zum Authentifizieren eines Nutzers gegenüber einer Mehrzahl von Programmen derselben Sicherheitsdomäne mittels eines ID-Tokens, der dem Nutzer kryptographisch gesichert zugeordnet ist. Das Nutzerauthentifizierungsmodul ist beispielsweise Teil eines Betriebssystems eines Computers oder eine Middleware ist. Das Nutzerauthentifizierungsmodul verwaltet ein mit dem ID-Token gemeinsames, geteiltes Geheimnis. Das Nutzerauthentifizierungsmodul ist dazu konfiguriert, das gemeinsame, geteilte Geheimnis für Mehrzahl von Programmen bereitzustellen und zwischen einzelnen Kommunikationssitzungen der Programme und dem ID-Token umzuschalten. Die zweite Kommunikationssitzung umfasst einen Datenaustausch nach einem Request-Response-Protokoll, welcher durch eine Ende-zu-Ende-Verschlüsselung unter Verwendung des gemeinsamen, geteilten Geheimnisses geschützt ist. Das Nutzerauthentifizierungsmodul gehört zu der Sicherheitsdomäne. Ausführungsformen sind dazu konfiguriert im Betrieb einzeln oder in Kombination miteinander alle zuvor beschriebenen Verfahren auszuführen.

Ausführungsformen umfassen ferner einen Computer mit einem Nutzerauthentifizierungsmodul zum Authentifizieren eines Nutzers gegenüber einer Mehrzahl von Programmen derselben Sicherheitsdomäne mittels eines zuvor beschriebenen ID-Tokens, wobei an den Computer ein Terminal mit einer ersten Kommunikations-schnittstelle zur Kommunikation mit dem ID-Token gekoppelt ist. Der Computer umfasst das mit dem ID-Token gemeinsame, geteilte Geheimnis. Ausführungsformen sind dazu konfiguriert im Betrieb einzeln oder in Kombination miteinander alle zuvor beschriebenen Verfahren auszuführen.

Ausführungsformen umfassen ferner ein System zum Authentifizieren eines Nutzers gegenüber einer Mehrzahl von Programmen einer Sicherheitsdomäne mittels eines zuvor beschrieben ID-Tokens und eines zuvor beschrieben Computers. Das System umfasst die Sicherheitsdomäne, zu welcher die Programme und das Nutzerauthentifizierungsmodul gehören. Ausführungsformen sind dazu konfiguriert im Betrieb einzeln oder in Kombination miteinander alle zuvor beschriebenen Verfahren auszuführen.

Im Weiteren werden Ausführungsformen der Erfindung mit Bezugnahme auf die Zeichnungen näher erläutert. Es zeigen:

Figur 1     ein erstes schematisches Blockdiagramm eines beispielhaften Systems gemäß der vorliegenden Erfindung,

Figur 2     ein zweites schematisches Blockdiagramm eines beispielhaften Systems gemäß der vorliegenden Erfindung,

Figur 3     ein UML-Diagramm eines ersten beispielhaften Verfahrens gemäß der vorliegenden Erfindung,

Figur 4     ein UML-Diagramm eines zweiten beispielhaften Verfahrens gemäß der vorliegenden Erfindung,

Figur 5     ein UML-Diagramm eines dritten beispielhaften Verfahrens gemäß der vorliegenden Erfindung,

Figur 6     ein UML-Diagramm eines vierten beispielhaften Verfahrens gemäß der vorliegenden Erfindung,

Figur 7     ein Flussdiagramm für ein fünftes beispielhaftes Verfahren gemäß der vorliegenden Erfindung und

Figur 8     ein Flussdiagramm für ein sechstes beispielhaftes Verfahren gemäß der vorliegenden Erfindung.

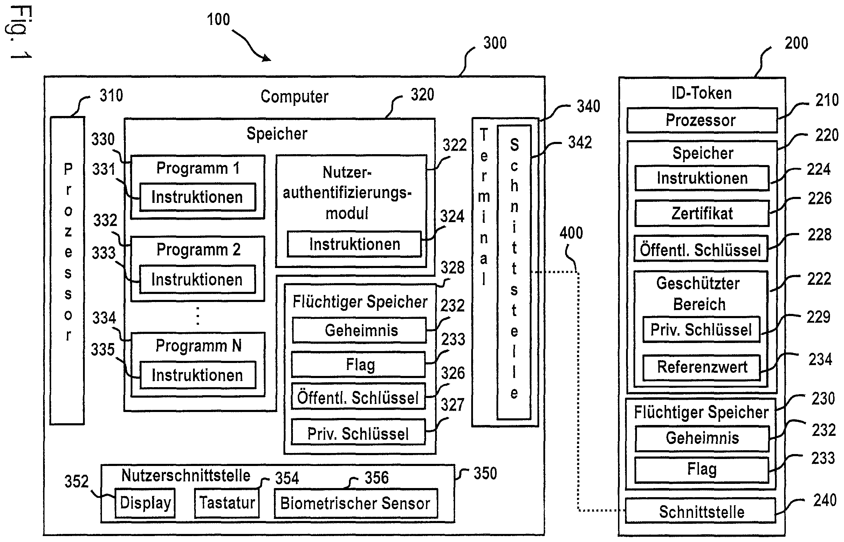

Figur 1 zeigt ein schematisches Blockdiagramm eines beispielhaften Systems 100 umfassend einen ID-Token 200 und einen Computer 300. Der ID-Token 200 umfasst einen Prozessor 210 sowie einen nicht-flüchtigen Speicher 220. Der ID-Token 200 kann mit einem Terminal 340 des Computers 300 mittels einer Schnittstelle 240 des ID-Tokens 200 und einer komplementären Schnittstelle 342 des Terminals 340 eine Kommunikation 400 ausführen. Die Kommunikation 400 ist beispielsweise eine kontaktlose Kommunikation. Hierbei kann es sich insbesondere um eine Nahfeldkommunikation, beispielsweise mittels RFID, Bluetooth oder WLAN handeln. Beispielsweise erfolgt die Kommunikation zwischen dem Terminal 340 und dem ID-Token 200 entsprechend der Norm ISO 14443 drahtlos mit einer Frequenz von 13,56 MHz.

In dem nicht-flüchtigen Speicher 220 sind Instruktionen 224 gespeichert, welche bei Ausführung durch den Prozessor 210 den ID-Token 200 veranlassen ein erfindungsgemäßes Verfahren auszuführen. Zudem ist in dem nicht-flüchtigen Speicher 220 beispielsweise ein Zertifikat 226 gespeichert, welches durch welches der ID-Token 200 einem Nutzer kryptographisch gesichert zugeordnet ist. Beispielsweise umfasst das Zertifikat 226 den Namen des Nutzers, ein Pseudonym des Nutzers und/oder ein den Nutzer kennzeichnendes Attribut. Bei dem Zertifikat 226 handelt es sich beispielsweise um ein Public-Key-Zertifikat nach dem Standard X.509, welche die Identität des Inhabers sowie Eigenschaften eines öffentlichen kryptographischen Schlüssels, beispielsweise des öffentlichen Schlüssels 228, bestätigt. Nach Ausführungsformen umfasst das Zertifikat 226 den öffentlichen Schlüssel 228, wobei der öffentliche Schlüssel 228 von dem ID-Token 220 beispielsweise in Form des Zertifikats 226 versandt wird. Der nicht-flüchtigen Speicher 220 weist einen geschützten Speicherbereich 222 auf. Der ID-Token 200 umfasst in seinem nicht-flüchtigen Speicher 210 des Weiteren ein statisches asymmetrisches kryptographisches Schlüsselpaar, welches den statischen öffentlichen Schlüssels 228 sowie den statischen privaten Schlüssel 229 umfasst, wobei der statischen privaten Schlüssel 229 in dem geschützten Speicherbereich 222 des Speichers 220 gespeichert ist. Zudem ist in dem geschützten Speicherbereich 222 ein Referenzwert 234 zum Verifizieren einer Kennung des Nutzers hinterlegt. Somit kann sich der Nutzer durch Abgleich einer erfassten Kennung, wie etwa einer PIN oder einem biometrischen Merkmal wie beispielsweise einem Fingerabdruck, mit dem hinterlegten Referenzwert 234 gegenüber dem ID-Token 200 authentifizieren.

Der ID-Token 200 umfasst zusätzlich zu dem nicht-flüchtigen Speicher 210 einen flüchtigen Speicher 230, welcher die dort gespeicherten Daten verliert, wenn die Stromversorgung unterbrochen wird. Weiter mag der ID-Token 200 keinen Energiespeicher, wie etwa eine Batterie oder einen Akkumulator umfassen. Die Energieversorgung des ID-Tokens erfolgt beispielsweise mittels einer Vorrichtung (nicht gezeigt) zum "Ernten" von Energie (energy harvesting), welche von dem Terminal 340 im Zuge einer Datenübertragung an den ID-Token 200 bereitgestellt wird. Nach Ausführungsformen wird der ID-Token 200 daher mit Energie versorgt, solange er sich in Kommunikationsreichweite bzw. im Lesebereich des Terminals 340 befindet. Wird der ID-Token 200 aus dem Lesebereich entfernt, wird die Stromversorgung unterbrochen und die in dem flüchtigen Speicher 222 gespeicherten Daten werden dadurch gelöscht. In dem flüchtigen Speicher 222 ist beispielsweise das gemeinsame, geteilte Geheimnis 232 gespeichert. Nach Ausführungsformen ist weiterhin ein Statusflag 233 der Nutzerauthentisierung in dem flüchtigen Speicher 222 gespeichert. Das Statusflag 233 wird beispielsweise auf eine erfolgreiche Nutzerauthentisierung gesetzt und in dem flüchtigen Speicher 222 gespeichert. Nach anderen Ausführungsformen (nicht gezeigt) sind das gemeinsame, geteilte Geheimnis 232 und/oder das Statusflag 233 anstelle des flüchtigen Speichers 230 in dem nicht-flüchtigen Speicher 220 gespeichert.

Der Computer 300 umfasst das Terminal 340 mit der Schnittstelle 342 zur kontaktlosen Kommunikation mit dem ID-Token 200. Nach Ausführungsformen wird der ID-Token 200 über die Schnittstelle 342 zudem mit Energie versorgt. Das Terminal 340 kann in Form einer externen Komponente an den Computer 300 angeschlossen oder in Form einer internen Komponente in diesen baulich integriert sein. Der Computer 300 kann zudem einen Prozessor 310, einen nicht-flüchtigen Speicher 320, einen flüchtigen Speicher 328 und eine Nutzerschnittstelle 350 umfassen.

In dem Speicher 320 sind beispielsweise eine Mehrzahl von Programmen 330, 332, 334 gespeichert, welche jeweils Instruktionen 331, 333, 335 umfassen, welche bei einer Auswahl des jeweiligen Programms durch den Prozessor 330 ausgeführt werden. Zum Ausführen der Programmen 330, 332, 334 durch den Prozessor 310 ist jeweils eine erfolgreiche Authentifizierung des Nutzers gegenüber dem entsprechenden Programm 330, 332, 334 erforderlich. Nach Ausführungsformen (nicht gezeigt) können einzelne oder alle Programme 330, 332, 334 auch auf einem Server und/oder einer Datenbank, auf welche der Server Zugriff hat, gespeichert sein. In letzterem Fall werden die Programmen 330, 332, 334 beispielsweise auf dem Server mittels Fernzugriff ausgeführt, wobei der Computer 300 die Programmen 330, 332, 334 als Client dargestellt und steuert. Der Fernzugriff kann beispielsweise unter Verwendung des Remote Desktop Protocol erfolgen. Die Kommunikation zwischen Server und Client 300 erfolgt beispielsweise kabellos oder per Kabel über ein Netzwerk, wie etwa ein Intranet oder das Internet, mittels Netzwerkschnittstellen. Beispielsweise wird ein VPN verwendet. Die Kommunikation erfolgt beispielsweise nach dem TCP/IP-Protokoll.

Zudem umfasst der Speicher 320 des Computers 300 ein Nutzerauthentifizierungsmodul 322, wobei ein Ausführung der Instruktionen 324 durch den Prozessor 310 den Computer 300 veranlassen ein erfindungsgemäßes Verfahren auszuführen. Zudem umfasst das Nutzerauthentifizierungsmodul 322 und/oder stellt das Nutzerauthentifizierungsmodul 322, beispielsweise in einem entsprechenden Container (nicht gezeigt), das gemeinsame, geteilte Geheimnis 232 und/oder das Statusflag 233 der Nutzerauthentisierung für die Programme 330, 332, 334 bereit. Zudem ist das Nutzerauthentifizierungsmodul 322 nach Ausführungsformen dazu konfiguriert, ein ephemeres asymmetrisches Schlüsselpaar zu erzeugen und bereitzustellen, wobei das ephemere asymmetrische Schlüsselpaar einen ephemeren öffentlichen Schlüssel 326 sowie einen ephemeren privaten Schlüssel 327 aufweist.

Das gemeinsame, geteilte Geheimnis 232, das Statusflag 233 sowie das ephemere asymmetrische Schlüsselpaar 326, 327 sind dabei in dem flüchtigen Speicher 328 gespeichert. Nach anderen Ausführungsformen (nicht gezeigt) sind das gemeinsame, geteilte Geheimnis 232, das Statusflag 233 und/oder das ephemere asymmetrische Schlüsselpaar 326, 327 anstelle des flüchtigen Speichers 328 in dem nicht-flüchtigen Speicher 320 gespeichert.

Schließlich umfasst der Computer eine Nutzerschnittstelle 350, das heißt ein sogenanntes User-Interface, welches beispielsweise ein Display 352, beispielsweise in Form eines ein berührungsempfindlichen Displays, d.h. eines sogenanntes Touchpanel, eine Tastatur 354 und/oder einen biometrischen Sensor 356 umfasst. Beispielsweise kann die Tastatur zum Erfassen einer persönlichen Identifikationsnummer (PIN) in Form einer numerischen oder alphanumerischen Zeichenfolge dienen und/oder der biometrische Sensor 356 kann zum Erfassen eines biometrischen Merkmals des Nutzers, beispielsweise in Form eines Fingerabdrucks, dienen.

Nach Ausführungsformen kann der Computer 300 weitere Sensoren (nicht gezeigt) umfassen, wie beispielsweise ein Mikrophon, ein Gyroskop, einen Beschleunigungssensor, einen GPS-Empfänger und/oder ein Thermometer. Nach Ausführungsformen können diese weiteren Sensoren zusätzlich vorgesehen sein. Das Display 352 mag beispielsweise vom Prozessor 310 derart angesteuert werden, dass es den Nutzer dazu auffordern, einen oder mehrere Finger auf den biometrischen Sensor 356 in Form eines Fingerabdrucksensor zu legen und/oder eine PIN über die Tastatur 354 einzugeben. Zudem mag das Display 352 dem Nutzer signalisieren, dass der Sensor 356 und/oder die Tastatur 354 einsatzbereit sind und/oder dass ein Fingerabdruck vollständig erfasst bzw. ein PIN vollständig eingegeben wurde und/oder dass ein Fehler aufgetreten ist. Nach Ausführungsformen können das Display 352 auch dazu konfiguriert sein anzuzeigen, wenn der Nutzer erfolgreich gegenüber einem der Programme 330, 332, 334 authentisiert wurde.

Nach Ausführungsformen kann auch der ID-Token 200 als biometrischer ID-Token mit einem biometrischen System auf einer Karte (bimetric system-on-card) oder auf einem Dokument (biometric system-on-document) konfiguriert sein. In diesem Fall kann der ID-Token 200 alternativ und/oder zusätzlich zum Computer 300 eine analoge Nutzerschnittstelle und/oder weitere Sensoren aufweisen (nicht gezeigt). Zudem kann der ID-Token 200 beispielsweise eine oder mehrere LEDs aufweisen (nicht gezeigt), welche dazu konfiguriert sind über verschiedene Farben, in denen die LEDs leuchten, anzuzeigen, dass der Fingerabdrucksensor und/oder die Tastatur einsatzbereit sind und/oder dass ein Fingerabdruck vollständig erfasst bzw. ein PIN vollständig eingegeben wurde und/oder dass ein Fehler aufgetreten ist. Nach Ausführungsformen können das Display und/oder die LEDs auch dazu konfiguriert sein anzuzeigen, wenn der Nutzer erfolgreich gegenüber einem der Programme 330, 332, 334 authentifiziert wurde.

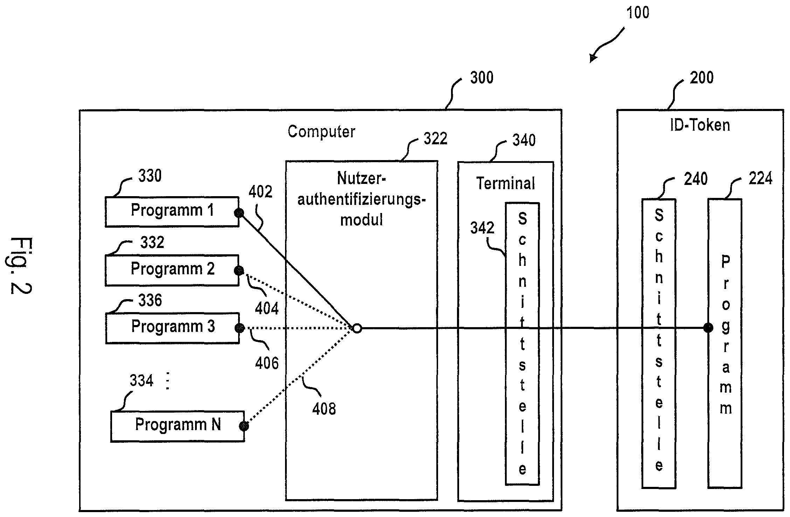

Figur 2 zeigt ein weiteres schematisches Blockdiagramm des beispielhaften Systems 100 aus Figur 1. Das System 100 ist dazu konfiguriert Ende-zu-Ende-Übertragungskanäle 402, 404, 406, 408, d.h. Mittels einer Ende-zu-Ende-Verschlüsslung geschützte Übertragungskanäle, für jedes der Programme 330, 332, 334, 336 bereitzustellen. Ein erstes Ende der Ende-zu-Ende-Übertragungskanäle 402, 404, 406, 408 bildet jeweils das entsprechende Programm 330, 332, 334, 336, während das Programm zum Authentifizieren des Nutzers mit den Instruktionen 224 das zweite Ende der Ende-zu-Ende-Übertragungskanäle 402, 404, 406, 408 bildet. Dabei stellen das Nutzerauthentifizierungsmodul 322 sowie das Programm 224 jeweils das gemeinsame, geteilte Geheimnis bereit, durch welches die Übertragungskanäle 402, 404, 406, 408 geschützt werden. Die Übertragungskanäle 402, 404, 406, 408 werden jeweils vom ersten Ende über das Nutzerauthentifizierungsmodul 322, das Terminal 340 mit der Schnittstelle 342 und der Schnittstelle 240 zum zweiten Ende ausgebildet. Das Nutzerauthentifizierungsmodul 322 ist dazu konfiguriert, zwischen den Übertragungskanäle 402, 404, 406, 408 und damit den Prorammen 330, 332, 334, 336 zu wechseln. Zudem ist das Nutzerauthentifizierungsmodul 322 nach Ausführungsformen dazu konfiguriert, die Reihenfolge festzulegen, in der die einzelnen Programme 330, 332, 334, 336 über den jeweiligen Übertragungskanal 402, 404, 406, 408 mit dem ID-Token 200 verbunden werden. Dies erfolgt beispielsweise mittels Mutex-Verfahren. Die Festlegung der Reihenfolge kann beispielsweise auf dem Prinzip eines Rundlaufs (Round-Robin), eines gewichteten Rundlaufs (Weighted Round Robin/WRR), First-Come First-Served (FCFS), Shortest-Job-Next (SJN), Earliest Due Date (EDD) Prioritätsscheduling und/oder auf Abhängigkeiten zwischen den einzelnen Programmen 330, 332, 334, 336 beruhen. Durch das Umschalten des Nutzerauthentifizierungsmoduls 322 zwischen den Programmen wird somit ein Zeitmultiplexverfahren realisiert, d.h. es werden in unterschiedlichen Zeitabschnitten bzw. Zeitschlitzen die Daten verschiedener Sender über den unter Verwendung des gemeinsamen, geteilten Geheimnisses verschlüsselten Kanal übertragen. Im vorliegenden Fall erfolgt ein Umschalten von einer ersten Kommunikationssitzung zu einer zweiten Kommunikationssitzung allerdings vorzugsweise erst nachdem die erste Kommunikationssitzung beendet wurde.

Nach Ausführungsformen erfolgt eine Authentifizierung des Nutzers somit einmal gegenüber dem Nutzerauthentifizierungsmodul 322, wobei das gemeinsame, geteilte Geheimnis als Ergebnis der Authentifizierung erzeugt wird. Mithin gilt diese Authentifizierung für alle Programm 330, 332, 334, 336, für welche das Nutzerauthentifizierungsmodul 322 einen Zugriff auf das gemeinsame, geteilte Geheimnis und/oder die daraus resultierenden kryptographischen Schlüssel ermöglicht. Bei einer Kommunikation über einen der Ende-zu-Ende-Übertragungskanals 402, 404, 406, 408, der unter Verwendung des gemeinsamen, geteilten Geheimnisses kryptographisch gesichert ist, weiß das entsprechende Programm 330, 332, 334, 336, dass der Kommunikationspartner, d.h. der ID-Token 200 bzw. der Nutzer, welchem der ID-Token zugeordnet ist, authentisiert ist. Zudem kann das Programm 330, 332, 334, 336 beispielsweise durch das Zertifikat 226 den Nutzer mit einem registrierten Nutzernamen verbinden. Nach Ausführungsformen (nicht gezeigt) können die Programm 330, 332, 334, 336 auch von einem entfernten Server ausgeführt werde, wobei der Computer 300 als Client dient.

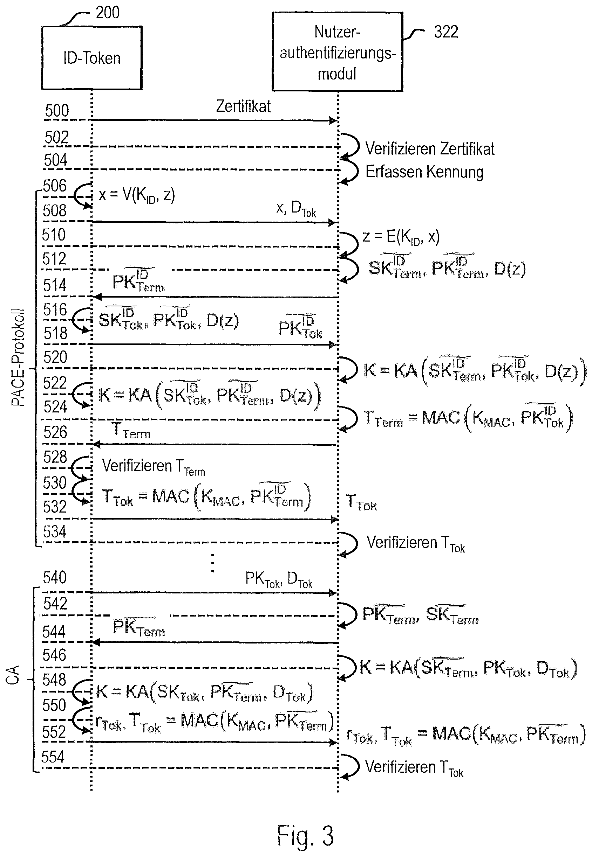

Figur 3 zeigt ein UML-Diagramm eines ersten beispielhaften Verfahrens. Die Kommunikation erfolgt zwischen dem ID-Token 200 und dem Computer 300, genauer gesagt zwischen einem Programm 224 des ID-Tokens zum Authentifizieren eines Nutzers und dem Nutzerauthentifizierungsmodul 322. In Schritt 500 sendet der ID-Token 200 das Zertifikat 226, durch welches der ID-Token 200 dem Nutzer kryptographisch gesichert zugeordnet ist, an den Computer 300. Der Computer 300 verifiziert das Zertifikat 226, beispielsweise durch Prüfen der Gültigkeitsdauer und der PKI des Zertifikats 226. Zusätzlich kann mittels einer Sperrliste geprüft werden, ob das Zertifikat 226 gesperrt ist. Das Verifizieren kann des Weiteren ein Auslesen eines den Nutzer kennzeichnenden Merkmals, wie etwa einen Namen, ein Pseudonym etc., aus dem Zertifikat 226 umfassen. Dieses kennzeichnende Merkmal kann als Benutzername zum Authentifizieren des Nutzers gegenüber dem Programm dienen.

Das Authentifizieren des Nutzers gegenüber dem ID-Token 200 kann über ein Erfassen einer Kennung des Nutzers durch eine dafür konfigurierte Erfassungsvorrichtung des Computers 300 erfolgen. Beispielsweise wird der Nutzer aufgefordert eine PIN mittels einer Tastatur einzugeben oder einen Fingerabdruck durch einen Fingerabdrucksensor erfassen zu lassen. Die in Schritt 504 erfasste Kennung wird dem Nutzerauthentifizierungsmodul 322 zur Verfügung gestellt. In dem ID-Token 200 ist ein Referenzwert 234 für die Kennung, vorzugsweise in einem geschützten Speicherbereich 222 seines Speichers 220, gespeichert. Der ID-Token 200 erzeugt in Schritt 506 eine Zufallszahl z und verschlüsselt diese mit einem aus dem Referenzwert für die Kennung erzeugten kryptographischen Schlüssel $K_{ID} = KDF_{ID}(ID)$, wobei KDF eine Funktion zum Ableiten eine kryptographischen Schlüssels (key derivation function) bezeichnet. Die verschlüsselte Zufallszahl $x = V(K_{ID}, z)$ wird in Schritt 508 zusammen mit einem statischen Domänenparameter $D_{Tok}$ von dem ID-Token 200 an das Nutzerauthentifizierungsmodul 322 übertragen. Der statischen Domänenparameter $D_{Tok}$ gibt Parameter an, die der weiteren Verschlüsselung zugrunde liegen. Bei Verwendung elliptischer Kurven für die Verschlüsselung legt $D_{Tok}$ beispielsweise die entsprechenden Kurven fest. In Schritt 508 wird die Kennung also nicht selbst übertragen. In Schritt 510 verwendet das Nutzerauthentifizierungsmodul 322 die erfasste Kennung, um die verschlüsselte Zufallszahl x wieder zu entschlüsseln. Ist die erfasste Kennung korrekt, d.h. stimmt er mit dem Referenzwert überein, so erhält das Nutzerauthentifizierungsmodul 322 die korrekte Zufallszahl $z = E(K_{ID}, x)$.

In den Schritten 512 und 516 erzeugen das Nutzerauthentifizierungsmodul 322 bzw. der ID-Token 200 jeweils ein ephemeres asymmetrisches Schlüsselpaar $\widetilde{SK_{Tok}^{ID}}$ , $\widetilde{PK_{Tok}^{ID}}$ bzw. $\widetilde{SK_{Term}^{ID}}$ , $\widetilde{PK_{Term}^{ID}}$ . Bei

$\widetilde{D(z)} = \mathrm{Map}(D_{Tok}, z)$ handelt es sich einen ephemeren Domänenparameter, welcher aus einer Abbildung der Zufallszahl z unter Verwendung des zuvor übertragenen Parameters $D_{Tok}$ ergibt. Zur Implementierung einer solchen Abbildung können unterschiedliche Algorithmen verwendet werden. Insbesondere kann die Zufallszahl z zu diesem Zweck auf einen ephemeren Generator abgebildet werden. Bei Verwendung eines Diffie-Hellman-Schlüsselaustausch mittels elliptischer Kurven, d.h. Elliptic Curve Diffie-Hellman (ECDH), für die Abbildung geht man von einem statischen Basispunkt G auf der elliptischen Kurve und einem ephemeren Basispunkt $\widetilde{G(z)}$ aus, wobei die Funktion Map:

$G \mapsto \widetilde{G(z)}$ als $\widetilde{G(z)} = z \cdot G + H$ definiert und $H \in \langle G \rangle$ so gewählt wird, dass $\log_G = H$ unbekannt ist. Der Punkt H wird beispielsweise durch einen anonymen Diffie-Hellman-Schlüsselaustausch berechnet. Bei Verwendung einer Diffie-Hellman-Abbildung geht man von einem statischen Generator g und einem ephemeren Generator g(z) aus. Die Funktion

Map: $g \mapsto \widetilde{g(z)}$ ist definiert als $\widetilde{g(z)} = g^z \cdot h$ und $h \in \langle g \rangle$ so gewählt wird, dass $\log g = h$ unbekannt ist. Das Gruppenelement h wird wie im oben beschriebenen Falle einer Verwendung elliptischer Kurven beispielsweise durch einen anonymen Diffie-Hellman-Schlüsselaustausch berechnet.

Durch die Abbildung der Domänenparameter und einen dabei gegebenenfalls ausgeführten Diffie-Hellman-Schlüsselaustausch wird beispielsweise ein gemeinsamer ephemerer Basispunkt G' durch das DHEC Protokoll mit Basispunkt G: G' = z·G + H vereinbart. Dabei ist G der Basispunkt aus den Domänenparametern $D_{Tok}$, z die Zufallszahl und H ein vereinbarter Blinding-Punkt. Die für das Nutzerauthentifizierungsmodul 322 erforderlichen Informationen zur Berechnung des temporären Basispunktes werden von dem ID-Token in Form von x und $D_{Tok}$ zur Verfügung gestellt. Das Nutzerauthentifizierungsmodul 322 kann diese jedoch nur nutzen, wenn es im Besitz der gültigen Kennung ist.

In den Schritten 514 und 518 werden die ephemeren öffentlichen Schlüssel $\widetilde{PK_{Term}^{ID}}$ bzw. $\widetilde{PK_{Term}^{ID}}$ ausgetauscht. Wurde bereits zum Festlegen der oben beschriebenen Abbildung ein Diffie-Hellman-Schlüsselaustausch (nicht gezeigt) durchgeführt, werden mit dem Schlüsselaustausch in den Schritten 514 und 518 insgesamt zweimal Schlüssel ausgetauscht. Dies ist vorteilhaft, um den eigentlichen Schlüsselaustausch in den Schritten 514 und 518 abhängig von der Erfassung der Kennung an dem Computer 300 zu machen. In der ersten Runde wird ausgehend von der Kennung, beispielweise einer PIN, ein Blinding-Punkt für einen EDCH vereinbart, welcher sich in jeder Sitzung ändert. In der der zweiten Runde wird dieser Punkt verwendet, um den eigentlichen Sitzungsschlüssel zu bestimmen.

In den Schritten 520 und 522 berechnen Nutzerauthentifizierungsmodul 322 und ID-Token 200 ein gemeinsames geteiltes Geheimnis $K = KA\left(\widetilde{SK_{Term}^{ID}}, \widetilde{PK_{Tok}^{ID}}, \widetilde{D(z)}\right)$ bzw. $K = KA\left(\widetilde{SK_{Tok}^{ID}}, \widetilde{PK_{Term}^{ID}}, \widetilde{D(z)}\right)$ , aus welchen Sitzungsschlüssel in Form eine Schlüssels $K_{Enc} = KDF_{Enc}(K)$ zum Verschlüsseln von Daten und einem Schlüssel $K_{MAC} = KDF_{MAC}(K)$ zum Authentifizieren von Daten. Nach Ausführungsformen werden das gemeinsame geteilte Geheimnis K bzw. die daraus abgeleiteten Sitzungsschlüssel $K_{MAC}$, $K_{Enc}$ des PACE-Protokolls zum Schützen von Kommunikationssitzungen mittels Ende-zu-Ende-Verschlüsselung verwendet, z.B. $K_{MAC}$ zum Authentifizieren von übertragenen Daten und $K_{Enc}$ zum Verschlüsseln übertragender Daten. In diesem Fall ist eine Erzeugung eines weiteren gemeinsamen geteilten Geheimnisses gemäß den Schritte 540 bis 554 nicht nötig.

Zum Verifizieren, ob erzeugten Sitzungsschlüssel übereinstimmen und damit die erfasste Kennung tatsächlich korrekt war, werden in den Schritten 524 und 530 von dem Nutzerauthentifizierungsmodul 322 und dem ID-Token 200 jeweils ein Authentifizierungstoken $T_{Term} = MAC\left(K_{MAC}, \widetilde{PK_{Tok}^{ID}}\right)$ bzw. $T_{Tok} = MAC\left(K_{MAC}, \widetilde{PK_{Term}^{ID}}\right)$ erzeugt, in den Schritten 526 und 532 übertragen und in den Schritten 528 und 534 mittels der privaten Schlüssel $\widetilde{SK_{Tok}^{ID}}$ bzw. $\widetilde{SK_{Term}^{ID}}$ verifiziert.

Auf Basis des PACE-Protokolls wurde vorerst allerdings nur die Korrektheit der erfassten Kennung festgestellt, d.h. der Nutzer durch den ID-Token 200 erfolgreich authentisiert. Zudem muss die Gültigkeit des ID-Tokens 200 verifiziert werden, d.h. der ID-Token 200 gegenüber dem Nutzerauthentifizierungsmodul 322 authentifiziert werden. Hierzu wird in den folgenden Schritten 540 bis 554 eine CA ausgeführt. Nach Ausführungsformen ist eine erfolgreiche Nutzerauthentisierung eine zwingende Voraussetzung für das Ausführen der CA. In diesem Fall kann aus einer erfolgreichen CA, d.h. der erfolgreichen Erzeugung eines gemeinsamen, geteilten Geheimnisses, automatisch auf eine zuvor erfolgreich ausgeführte Nutzerauthentisierung geschlossen werden.

Der ID-Token 200 umfasst ein statisches asymmetrischen Schlüsselpaar $SK_{Tok}$ und $PK_{Tok}$ sowie zugehörige Domänenparameter $D_{Tok}$. In Schritt 540 sendet der ID-Token 200 den statischen öffentlichen Schlüssel $PK_{Tok}$ sowie die zugehörige Domänenparameter $D_{Tok}$ an das Nutzerauthentifizierungsmodul 322. Das Nutzerauthentifizierungsmodul 322 erzeugt in Schritt 542 ein ephemeres asymmetrisches Schlüsselpaar $\widetilde{PK_{Term}}$, $\widetilde{SK_{Term}}$ und sendet den ephemeren öffentlichen Schlüssel $\widetilde{PK_{Term}}$ in Schritt 544 an den ID-Token 200. Nach alternativen Ausführungsformen wurde das ephemere asymmetrische Schlüsselpaar $\widetilde{PK_{Term}}$, $\widetilde{SK_{Term}}$ bereits zuvor, beispielsweise im Zuge einer Terminal Authentisierung (TA), erzeugt. Wurde zuvor eine TA ausgeführt und dabei bereits ein komprimierter ephemerer öffentlicher Schlüssel $Comp\left(\widetilde{PK_{Term}}\right)$ an den ID-Token 200 übertragen, berechnet der ID-Token 200 aus dem ephemeren öffentlichen Schlüssel $\widetilde{PK_{Term}}$ einen komprimierten ephemeren öffentlichen Schlüssel $Comp\left(\widetilde{PK_{Term}}\right)$ und vergleicht diesen mit dem zuvor empfangenen.

In den Schritten 546 und 548 berechnen der ID-Token 200 und das Nutzerauthentifizierungsmodul 322 ein gemeinsames, geteiltes Geheimnis $K = KA\left(SK_{Tok}, \widetilde{PK_{Term}}, D_{Tok}\right) = KA\left(\widetilde{SK_{Term}}, PK_{Tok}, D_{Tok}\right)$ unter Verwendung der in den Schritten 540 und 544 übertragenen öffentlichen Schlüssel $PK_{Tok}$ und $\widetilde{PK_{Term}}$.

Der ID-Token wählt in Schritt 550 eine Zufallszahl $r_{Tok}$ und leitet aus dem gemeinsamen, geteilten Geheimnis K zwei Sitzungsschlüssel $K_{MAC} = KDF_{MAC}(K, r_{Tok})$ und $K_{Enc} = KDF_{Enc}(K, r_{Tok})$ ab, wobei $K_{MAC}$ zum Authentifizieren von übertragenen Daten und $K_{Enc}$ zum Verschlüsseln übertragender Daten dient. Zudem wird ein Authentifizierungstoken $T_{Tok} = MAC\left(K_{MAC}, \widetilde{PK_{Term}}\right)$ berechnet. In Schritt 552 werden $r_{Tok}$ und $T_{Tok} = MAC\left(K_{MAC}, \widetilde{PK_{Term}}\right)$ an das Nutzerauthentifizierungsmodul 322 gesendet. Das Nutzerauthentifizierungsmodul 322 berechnet unter Verwendung von $r_{Tok}$ ebenfalls $K_{MAC} = KDF_{MAC}(K, r_{Tok})$ sowie $K_{Enc} = KDF_{ENC}(K, r_{Tok})$ und verifiziert in Schritt 554 schließlich das Authentifizierungstoken $T_{Tok}$ unter Verwendung von $K_{MAC}$. Die Authentizität des öffentlichen Schlüssels $PK_{Tok}$ ergibt sich aus der erfolgreichen Verifizierung des Zertifikats in Schritt 502.

Durch die Erzeugung der Sitzungsschlüssel $K_{MAC}$ und $K_{Enc}$ wird somit ein Ende-zu-Ende-Übertragungskanal zwischen dem ID-Token 200 und dem Nutzerauthentifizierungsmodul 322 bereitgestellt. Durch das PACE-Protokoll wurde der Nutzer gegenüber dem ID-Token 200 authentisiert und durch die CA wurde der ID-Token gegenüber dem Nutzerauthentifizierungsmodul 322 authentisiert. Im Ergebnis ist somit der Nutzer gegenüber dem Nutzerauthentifizierungsmodul 322 authentisiert. Diese einmalige Authentisierung gilt für alle Programme, die Zugriff auf das gemeinsame, geteilte Geheimnis und/oder die Sitzungsschlüssel haben, bzw. für die das gemeinsame, geteilte Geheimnis und/oder daraus abgeleitete Sitzungsschlüssel von dem Nutzerauthentifizierungsmodul 322 bereitgestellt werden. Jede weitere unter Verwendung der Sitzungsschlüssel verschlüsselte Kommunikation, insbesondere zwischen den Programmen und dem ID-Token ist somit dem authentisierten Nutzer zugeordnet, welchem der ID-Token 200 zugeordnet ist. Die Authentisierung gegenüber den einzelnen Programmen erfolgt somit implizit, d.h. zusätzliche individuelle Authentifizierungen gegenüber den einzelnen Programmen entfallen. Vielmehr wird die Authentifizierung gebündelt durch das Nutzerauthentifizierungsmodul 322.

Das Verfahren kann zusätzlich beispielsweise eine TA (Terminal Authentisierung) umfassen, welche beispielsweise zwischen PACE-Protokoll und CA ausgeführt wird.

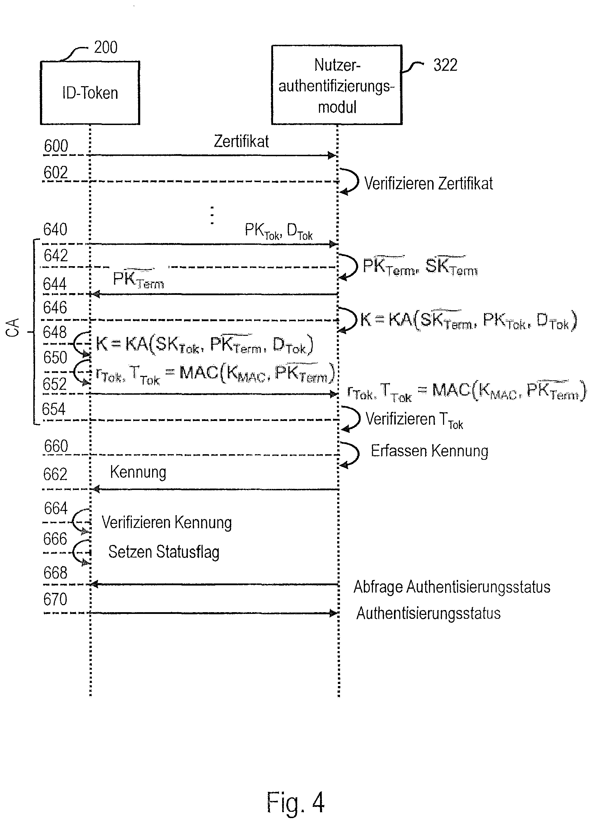

Figur 4 zeigt ein UML-Diagramm eines zweiten beispielhaften Verfahrens. Die Schritte 600 und 602 sind analog zu den Schritten 500 und 502 in Figur 3. Im Falle des in Figur 4 erfolgt die Nutzerauthentisierung nach der Authentisierung des ID-Token, d.h. der CA. Die CA gemäß Schritten 640 bis 654 ist identisch zu der CA gemäß Schritten 540 bis 554 aus Figur 3. In Schritt 660 wird die Kennung des Nutzers durch die Erfassungsvorrichtung des Computers 330 erfasst. Die im Zuge der CA erzeugten kryptographischen Schlüssel $K_{MAC}$ und $K_{Enc}$ werden verwendet, um die Kennung in Schritt 662 über einen kryptographisch mittels Ende-zu-Ende-Verschlüsselung gesicherten Übertragungskanal an das ID-Token 200 zu übertragen. In Schritt 664 wird die vom ID-Token empfangenen Kennung mittels eines vorzugsweise im geschützten Bereich des Speichers des ID-Tokens 200 gespeicherten Referenzwerts verifiziert wird. Da die Kennung über einen kryptographisch gesicherten Kanal übertragen wird, erübrigt sich ein zusätzlich kryptographisch gesicherter Abgleich mittels PACE-Protokoll. Im Falle der Figur 4 ist eine erfolgreiche Nutzerauthentisierung jedoch keine zwingende Voraussetzung für das Ausführen der CA mehr, da die CA bereits vor der Nutzerauthentisierung erfolgt. Mithin kann aus einer erfolgreichen CA noch nicht auf eine erfolgreiche Nutzerauthentisierung geschlossen werden. In Schritt 666 wird daher auf eine erfolgreiche Nutzerauthentisierung hin, d.h. auf eine erfolgreiche Verifizierung der Kennung hin, ein Statusflag der Nutzerauthentisierung durch den ID-Token 200 gesetzt. In Schritt 668 wird der Status der Nutzerauthentisierung durch das Nutzerauthentifizierungsmodul 322 abgefragt. Als Antwort auf die Abfrage durch das Nutzerauthentifizierungsmodul 322 teilt der ID-Token 200 einem Request-Response-Protokoll folgend in Schritt 670 den Nutzerauthentifizierungsmodul 322 den abgefragten Authentisierungsstatus der Nutzerauthentisierung über den kryptographisch mittels Ende-zu-Ende-Verschlüsselung gesicherten Übertragungskanal mit.

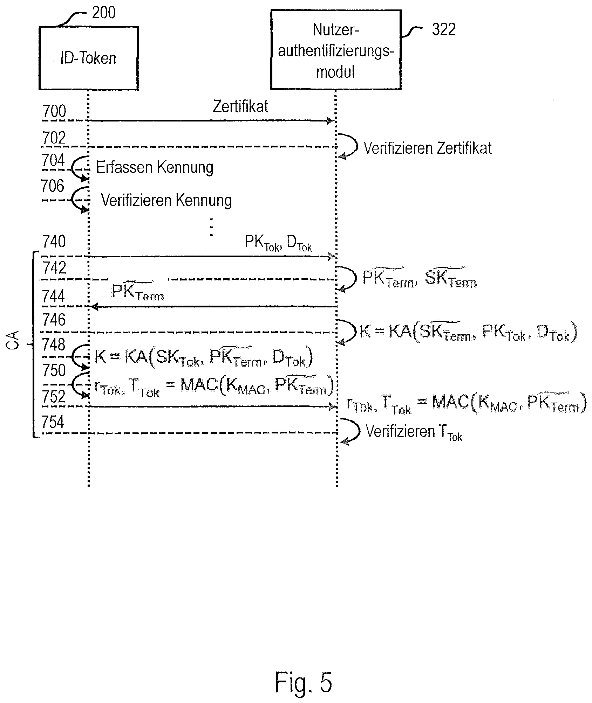

Figur 5 zeigt ein UML-Diagramm eines dritten beispielhaften Verfahrens. Im Falle des in Figur 5 gezeigten Verfahrens verfügt der ID-Token 200 selbst über eine Erfassungsvorrichtung für eine Kennung des Nutzers. Mit anderen Worten kann sich der Nutzer direkt gegenüber dem ID-Token 200 Authentifizieren im Gegensatz zu der indirekten Authentifizierung über den Computer 330 mittels PACE-Protokoll im Falle der Figur 3.

Die Schritte 700 und 702 sind analog zu den Schritten 500 und 502 in Figur 3. In Schritt 704 erfasst die Erfassungsvorrichtung des ID-Tokens 200 die Kennung, welcher in Schritt 706 mittels eines vorzugsweise im geschützten Bereich des Speichers des ID-Tokens 200 gespeicherten Referenzwerts verifiziert wird. Da die Kennung direkt durch den ID-Token 200 erfasst wird, erübrigt sich ein kryptographisch gesicherter Abgleich mit dem Nutzerauthentifizierungsmodul 322 mittels PACE-Protokoll. In diesem Fall ist das PACE-Protokoll insbesondere nicht anwendbar, da eine Voraussetzung für das PACE-Protokoll ein geteiltes Geheimnis zwischen ID-Token 200 und Nutzerauthentifizierungsmodul 322 ist. Ein solches geteiltes Geheimnis für das PACE-Protokoll kann beispielsweise in einer durch den Computer 300 erfassten Kennung sowie einem in dem ID-Token 200 hinterlegten Referenzwert bestehen. Im Falle der Figur 4 wird ein gemeinsames, geteiltes Geheimnis zwischen ID-Token 220 und Nutzerauthentifizierungsmodul 322 erst durch die CA gemäß Schritten 740 bis 754 erzeugt. Die folgende CA gemäß Schritten 740 bis 754 ist identisch zu der CA gemäß Schritten 540 bis 554 aus Figur 3. Die vor der CA ausgeführte Nutzerauthentisierung kann wie in Figur 3 auch im Falle der Figur 5 zwingende Voraussetzung für das Ausführen der CA sein, womit kein Statusflag zum Anzeigen einer erfolgreichen Nutzerauthentisierung notwendig ist, da bereits aus einer erfolgreichen CA an sich auf eine zuvor erfolgreich ausgeführte Nutzerauthentisierung geschlossen werden kann.

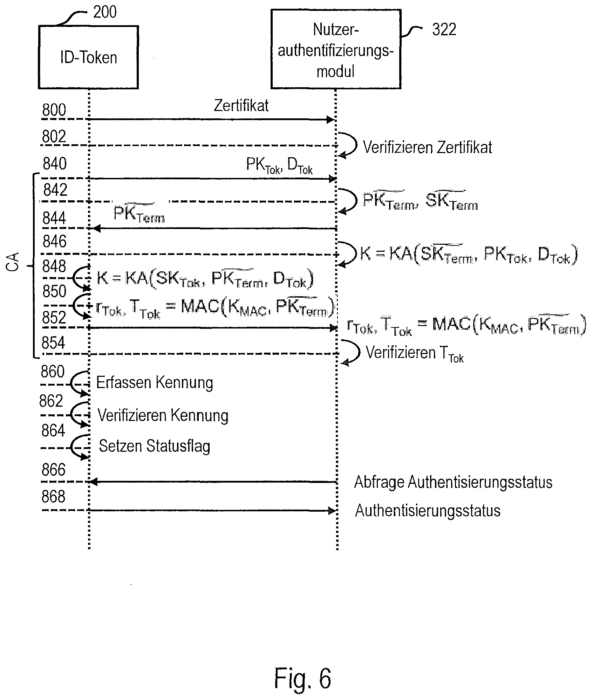

Figur 6 zeigt ein UML-Diagramm eines vierten beispielhaften Verfahrens. Wie im Falle des Verfahrens gemäß Figur 4 erfolgt die Nutzerauthentisierung erst nach der CA. Die Schritte 800 bis 854 sind dabei analog zu den Schritten 600 und 602 in Figur 4. Im Falle des in Figur 6 gezeigten Verfahrens verfügt der ID-Token 200 aber wie im Falle des Verfahrens nach Figur 5 selbst über eine Erfassungsvorrichtung für eine Kennung des Nutzers. Mithin sind die Schritte 860 und 862, d.h. Erfassen und Verifizieren der Kennung, analog zu Schritten 704 und 706 in Figur 5.

Im Falle der Figur 6 ist eine erfolgreiche Nutzerauthentisierung jedoch, wie auch in Figur 4, keine zwingende Voraussetzung für das Ausführen der CA, da die CA bereits vor der Nutzerauthentisierung erfolgt. Mithin kann aus einer erfolgreichen CA noch nicht auf eine erfolgreiche Nutzerauthentisierung geschlossen werden. Zur Prüfung, ob tatsächlich eine erfolgreiche Nutzerauthentisierung durchgeführt wurde. ist daher wie in Figur 4 ein entsprechendes Statusflag der Nutzerauthentisierung notwendig. Die folgenden Schritte 864 bis 868, d.h. Setzen des Statusflags durch das ID-Token und Übertragen an das Nutzerauthentifizierungsmodul, sind daher analog zu den Schritten 666 bis 670 in Figur 4.

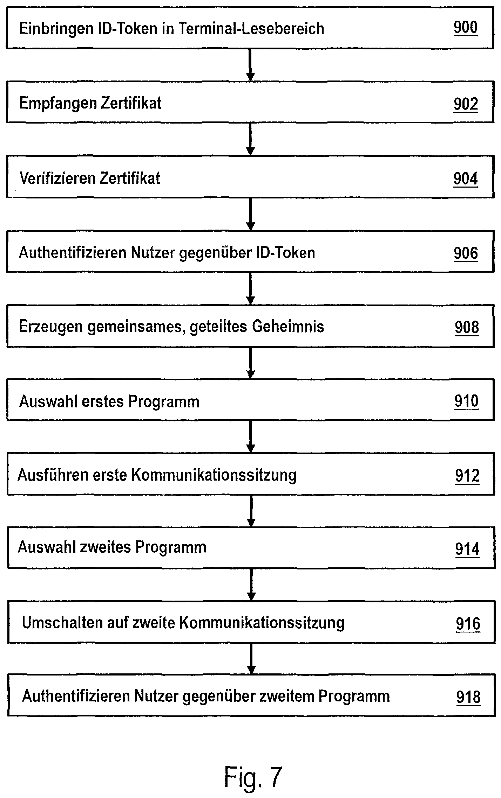

Figur 7 zeigt ein Flussdiagramm eines fünften beispielhaften Verfahrens. Dieses Verfahren kann beispielsweise die Verfahren gemäß Figur 3 oder 5 umfassen. In Schritt 900 wird der ID-Token 200 in den Lesebereich bzw. die Kommunikationsreichweite des Terminals eingebracht. Wird der ID-Tokens 200 über das Kommunikationssignal des Terminals 340 mit Energie versorgt, führt das Einbringen in den Terminal-Lesebereich zu einer konstanten Energieversorgung, die ein Abspeichern von Daten in dem flüchtigen Speicher 230 ermöglicht. Wird der ID-Token 200 aus dem Terminal-Lesebereich wieder entfernt, führt dies zu einer Unterbrechung der Energieversorgung, in Folge dessen die im flüchtigen Speicher 230 gespeicherten Daten verloren gehen. In Schritt 902 empfängt das Nutzerauthentifizierungsmodul 322 das Zertifikat 266, welches in Schritt 904 verifiziert wird. In Schritt 906 authentifiziert sich der Nutzer gegenüber dem ID-Token 200. Dies kann beispielsweise durch Erfassen einer Kennung des Nutzers mittels einer Erfassungsvorrichtung 354, 356 des Computers 300 und einer Verifikation der erfassten Kennung durch Abgleich mit einem in dem ID-Token 200 hinterlegten Referenzwert 234 erfolgen. Zur kryptographischen Absicherung des Abgleichs ist ein geeignetes kryptographisches Verfahren erforderlich, wie etwa das PACE-Protokoll gemäß den Schritten 506 bis 534 aus Figur 3. Alternative oder zusätzlich kann eine Kennung des Nutzers direkt durch den ID-Token 220 erfasst werden, wenn dieser über geeignete Erfassungsvorrichtungen, wie etwa eine Tastatur und/oder einen biometrischen Sensor verfügt. Im Falle einer Erfassung durch den ID-Token selbst wird, kann die erfasste Kennung direkt mit dem Referenzwert gemäß den Schritten 704 und 706 der Figur 5 verglichen werden. Nach Ausführungsformen kann der Referenzwert auch in Form eines verschlüsselten Werts oder als ein die Kennung eindeutig definierenden Hash-Wert abgespeichert sein. In diesem Fall kann der Abgleich mit dem Referenzwert ein vorheriges Verschlüsseln und/oder Hashen der erfassten Kennung umfassen.

In Schritt 908 wird ein gemeinsames, geteiltes Geheimnis beispielsweise mittels CA erzeugt, wie etwa in den Schritten 540 bis 554 der Figur 3 sowie den Schritten 640 bis 654 der Figur 4 erläutert. Das Erzeugen eines gemeinsamen, geteilten Geheimnisses entspricht einer Authentifizierung des ID-Tokens 200 gegenüber dem Nutzerauthentifizierungsmodul 322. Die Kombination aus den Schritten 906 und 908 stellt somit eine Authentifizierung des Nutzers gegenüber dem Nutzerauthentifizierungsmodul 322 dar. Diese Authentifizierung gilt auch gegenüber den Programmen, welche sich in einer gemeinsamen Sicherheitsdomäne befinden und Zugriff auf das gemeinsame, geteilte Geheimnis und/oder daraus resultierenden kryptographischen Schlüsseln besitzen.

In Schritt 910 wird ein erstes Programm ausgewählt und in Schritt 912 eine erste Kommunikationssitzung ausgeführt. In Schritt 914 wird ein zweites Programm ausgewählt und nach Beendigung der ersten Kommunikationssitzung in Schritt 916 von der ersten auf die zweite Kommunikationssitzung umgeschaltet, wobei das zweite Programm Zugriff auf das gemeinsame, geteilte Geheimnis und/oder daraus abgeleitete kryptographische Schlüssel erhält. In Schritt 918 wird die zweite Kommunikationssitzung ausgeführt, wobei die zweite Kommunikationssitzung einen Datenaustausch nach einem Request-Response-Protokoll umfasst, welcher durch eine Ende-zu-Ende-Verschlüsselung unter Verwendung des gemeinsamen, geteilten Geheimnisses geschützt ist.

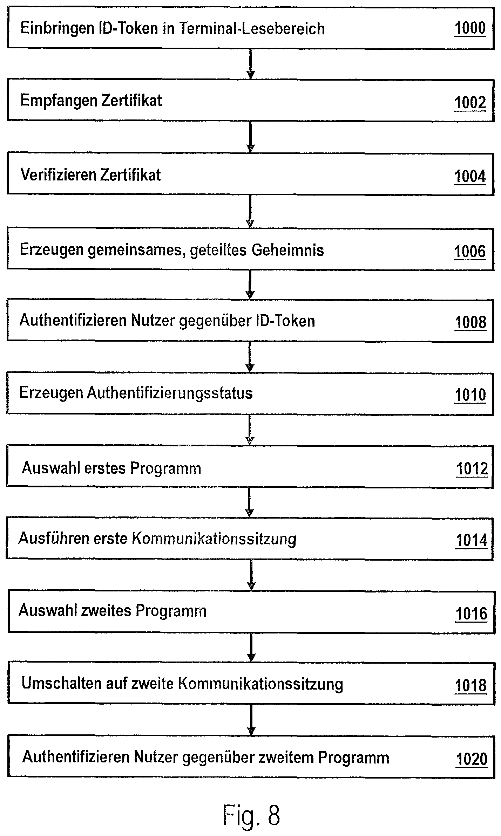

Figur 8 zeigt ein Flussdiagramm eines sechsten beispielhaften Verfahrens. Dieses Verfahren kann beispielsweise die Verfahren gemäß Figur 4 oder 6 umfassen. Dabei sind die Schritte 1000 bis 1004 und 1012 bis 1020 analog zu den Schritten 900 bis 904 und 910 bis 918. Im Gegensatz zu dem Verfahren in Figur 7 wird im Falle der Figur 8 allerdings zuerst das gemeinsame, geteilte Geheimnis in Schritt 1006 erzeugt und erst anschließend erfolgt die Authentifizierung des Nutzers gegenüber dem ID-Token in Schritt 1008. Mithin ist ein Statusflag notwendig, welches eine erfolgreiche Nutzerauthentisierung anzeigt, da aus dem erfolgreich erzeugten gemeinsamen, geteilten Geheimnis nicht auch auf eine erfolgreiche Nutzerauthentisierung geschlossen werden kann. Ein entsprechendes Statusflag wird in Schritt 1010 erzeugt. Nach Ausführungsformen wird zudem sowohl vor dem Ausführen der ersten Kommunikationssitzung in Schritt 1014, als auch vor dem Umschalten auf die zweite Kommunikationssitzung in Schritt 1018 jeweils geprüft, ob ein Statusflag gesetzt ist, welches eine erfolgreiche Nutzerauthentisierung anzeigt.

Bezugszeichenliste

| | |
|---|---|
| 100 | System |
| 200 | ID-Token |
| 210 | Prozessor |
| 220 | nicht-flüchtiger Speicher |
| 222 | geschützter Speicherbereich |
| 224 | Instruktionen |
| 226 | Zertifikat |
| 228 | statischer öffentlicher Schlüssel |
| 229 | statischer privater Schlüssel |
| 230 | flüchtiger Speicher |
| 232 | gemeinsames, geteiltes Geheimnis |
| 233 | Flag |
| 234 | Referenzwert |
| 240 | Schnittstelle |
| 300 | Computer |
| 310 | Prozessor |
| 320 | nicht-flüchtiger Speicher |
| 322 | Nutzerauthentifizierungsmodul |
| 324 | Instruktionen |
| 326 | ephemerer öffentlicher Schlüssel |
| 327 | ephemerer privater Schlüssel |

328 flüchtiger Speicher
330 Programm
331 Instruktionen
332 Programm
333 Instruktionen
334 Programm
335 Instruktionen
336 Programm
340 Terminal
342 Schnittstelle
350 Nutzerschnittstelle
352 Display
354 Tastatur
356 biometrischer Sensor
400 Kommunikation
402 Ende-zu-Ende-Übertragungskanal
404 Ende-zu-Ende-Übertragungskanal
406 Ende-zu-Ende-Übertragungskanal
408 Ende-zu-Ende-Übertragungskanal

## Patentansprüche

1. Verfahren zum Authentifizieren eines Nutzers gegenüber einer Mehrzahl von Programmen (330, 332, 334, 336) derselben Sicherheitsdomäne mittels eines Computers (300) und eines ID-Tokens (200), wobei der ID-Token (200) dem Nutzer kryptographisch gesichert zugeordnet ist,

   wobei an den Computer (300) ein Terminal (340) mit einer ersten Kommunikationsschnittstelle (240) zur Kommunikation mit dem ID-Token (200) gekoppelt ist,
   wobei der ID-Token (200) eine zweite Kommunikationsschnittstelle (342) zur Kommunikation mit dem Terminal (340) umfasst,
   wobei jedes der Programme (330, 332, 334, 336) derart konfiguriert ist, dass das jeweilige Programm (330, 332, 334, 336) eine erfolgreiche Authentifizierung des Nutzers gegenüber dem entsprechenden Programm (330, 332, 334, 336) erfordert,
   wobei der Computer (300) und der ID-Token (200) jeweils ein gemeinsames, geteiltes Geheimnis (232) umfassen, welches zum Ausführen einer Ende-zu-Ende-Verschlüsselung vorgesehen ist, wobei das gemeinsame, geteilte Geheimnis (232) auf dem Computer (300) von einem Nutzerauthentifizierungsmodul (322) verwaltet wird, wobei das Nutzerauthentifizierungsmodul (322) zu der Sicherheitsdomäne gehört,
   wobei das Verfahren umfasst:

      • Auswahl eines ersten Programms der Mehrzahl von Programmen (330, 332, 334, 336),
      • Bereitstellen des gemeinsamen, geteilten Geheimnisses (232) für das erste Programm durch das Nutzerauthentifizierungsmodul (322),
      • Ausführen einer ersten Kommunikationssitzung zwischen dem ersten Programm und dem ID-Token (200), wobei die erste Kommunikationssitzung einen Datenaustausch nach einem Request-Response-Protokoll umfasst, welcher durch eine Ende-zu-Ende-Verschlüsselung unter Verwendung des gemeinsamen, geteilten Geheimnisses (232) geschützt ist,
      • Auswahl eines zweiten Programms der Mehrzahl von Programmen (330, 332, 334, 336),
      • Bereitstellen des gemeinsamen, geteilten Geheimnisses (232) für das zweite Programm durch das Nutzerauthentifizierungsmodul (322) und
      • Nach Beendigung der ersten Kommunikationssitzung Umschalten auf eine zweite Kommunikationssitzung zwischen dem zweiten Programm und dem ID-Token (200), wobei die zweite Kommunikationssitzung einen Datenaustausch nach einem Request-Response-Protokoll umfasst, welcher durch eine Ende-zu-Ende-Verschlüsselung unter Verwendung des gemeinsamen, geteilten Geheimnisses (232) geschützt ist.

2. Verfahren nach Anspruch 1, wobei das gemeinsame, geteilte Geheimnis (232) auf dem ID-Token (200) in einem flüchtigen Speicher (230) oder einem nicht-flüchtigen Speicher (220) des ID-Tokens (200) gespeichert ist und/oder wobei das gemeinsame, geteilte Geheimnis (232) auf dem Computer (300) in einem flüchtigen Speicher (328) oder einem nicht-flüchtigen Speicher (320) des Computers (300) gespeichert ist.

**3.** Verfahren nach einem der vorhergehenden Ansprüche, wobei das Verfahren ferner umfasst:

• Empfangen eines Zertifikats (226) von dem ID-Token (200), durch welches der ID-Token (200) dem Nutzer kryptographisch gesichert zugeordnet ist,
• Verifizieren des Zertifikats (226),
• Festlegen des gegenüber den Programmen (330, 332, 334, 336) zu authentifizierenden Nutzers anhand des verifizierten Zertifikats (226), oder

wobei das Verfahren ferner umfasst:
Empfangen einer Eingabe, welche den gegenüber den Programmen (330, 332, 334, 336) zu authentifizierenden Nutzer festlegt.

**4.** Verfahren nach einem der vorhergehenden Ansprüche, wobei der Computer (300) eine Erfassungsvorrichtung (350) zum Erfassen einer Kennung des Nutzers umfasst und wobei das Verfahren ferner umfasst:

Authentifizieren des Nutzers gegenüber dem ID-Token (200), wobei das Authentifizieren umfasst:

• Erfassen einer Kennung des Nutzers durch die Erfassungsvorrichtung (350) des Computers (300),
• Verifizieren der erfassten Kennung unter Verwendung eines kryptographisch gesicherten Datenaustauschs zwischen Computer (300) und ID-Token (200) sowie eines in einem geschützten Speicherbereich (222) des ID-Tokens (200) gespeicherten Referenzwerts (234) für die Kennung, oder

wobei der ID-Token (200) eine Erfassungsvorrichtung zum Erfassen einer Kennung des Nutzers umfasst und wobei das Verfahren ferner umfasst:
Authentifizieren des Nutzers gegenüber dem ID-Token (200), wobei das Authentifizieren umfasst:

• Erfassen einer Kennung des Nutzers durch die Erfassungsvorrichtung des ID-Tokens (200),
• Verifizieren der erfassten Kennung unter Verwendung eines in einem geschützten Speicherbereich (222) des ID-Tokens (200) gespeicherten Referenzwerts (234) für die Kennung.

**5.** Verfahren nach Anspruch 4, wobei auf eine erfolgreiche Verifizierung der erfassten Kennung hin ein Statusflag (233) der Nutzerauthentisierung durch den ID-Token (200) gesetzt wird und eine Kommunikationssitzung zwischen einem Programme der Mehrzahl von Programmen (330, 332, 334, 336) und dem ID-Token (200) nur unter der Voraussetzung einer positiven Prüfung des Statusflags (233) ausgeführt wird.

**6.** Verfahren nach Anspruch 5, wobei das Verfahren ferner umfasst:

• Empfangen des Statusflags (233) durch das Nutzerauthentifizierungsmodul (322),
• Verwalten des Statusflags (233) durch das Nutzerauthentifizierungsmodul (322) zusammen mit dem gemeinsamen, geteilten Geheimnis (232), sodass das Statusflags (233) auf eine Auswahl eines der Programme der Mehrzahl von Programmen (330, 332, 334, 336) hin zusammen mit dem gemeinsamen, geteilten Geheimnisse (232) durch das Nutzerauthentifizierungsmodul (322) für das entsprechende Programm bereitgestellt wird und eine Kommunikationssitzung zwischen dem entsprechenden Programm und dem ID-Token (200) nur unter der Voraussetzung einer positiven Prüfung des bereitgestellten Statusflags (233) ausgeführt wird.

**7.** Verfahren nach einem der vorhergehenden Ansprüche, wobei der ID-Token (200) ein statisches asymmetrisches Schlüsselpaar umfasst, welches einen statischen privaten und einen statischen öffentlichen Schlüssel (228, 229) aufweist, wobei der statische private Schlüssel (229) in einem geschützten Speicherbereich (222) des ID-Tokens (200) gespeichert ist, und wobei das Verfahren ferner umfasst:
Erzeugen des gemeinsamen, geteilten Geheimnisses (232), wobei das Erzeugen des gemeinsamen, geteilten Geheimnisses (232) umfasst:

• Senden des statischen öffentlichen Schlüssels (228) an das Nutzerauthentifizierungsmodul (322),
• Erzeugen eines ephemeren asymmetrisches Schlüsselpaar durch das Nutzerauthentifizierungsmodul (322), wobei das erzeugte asymmetrische Schlüsselpaar einen ephemeren privaten und einen ephemeren öffentlichen Schlüssel (326, 327) aufweist,

• Senden des ephemeren öffentlichen Schlüssels (326) an den ID-Token (200),
• Berechnen des gemeinsamen, geteilten Geheimnisses (232) durch den ID-Token (200) unter Verwendung des statischen privaten Schlüssels (229) und des ephemeren öffentlichen Schlüssels (326),
• Speichern des gemeinsamen, geteilten Geheimnisses (232) durch den ID-Tokens (200),
• Berechnen des gemeinsamen, geteilten Geheimnisses (232) durch das Nutzerauthentifizierungsmodul (322) unter Verwendung des ephemeren privaten Schlüssels (327) und des statischen öffentlichen Schlüssels (228),
• Verwalten des gemeinsamen, geteilten Geheimnisses (232) durch das Nutzerauthentifizierungsmodul (322).

8. Verfahren nach einem der vorhergehenden Ansprüche, wobei das Verfahren ferner umfasst: auf ein Logout-Kommando hin Löschen des gemeinsamen, geteilten Geheimnisses (232) und/oder des Statusflags (233) auf dem Computer (300) und/oder Senden eines Löschkommandos zum Löschen des gemeinsamen, geteilten Geheimnisses (232) und/oder des Statusflags (233) an den ID-Token (200), und/oder
wobei das gemeinsame, geteilte Geheimnis (232) und/oder das Statusflag (233) bei einem Umschalten von einer Kommunikationssitzung zu einer anderen Kommunikationssitzung in dem flüchtigen Speicher (230) oder nicht-flüchtigen Speicher (220) des ID-Tokens (200) gespeichert bleibt.

9. Verfahren nach einem der Ansprüche 7 bis 8, wobei das Verfahren ferner umfasst:

• Berechnen einer Zufallszahl durch den ID-Token (200),
• Berechnen zweier symmetrischer kryptographischer Schlüssel durch den ID-Token (200) unter Verwendung des gemeinsamen, geteilten Geheimnisses (232) und der Zufallszahl, wobei ein erster der beiden symmetrischen Schlüssel zum Verschlüsseln von zu übertragenden Daten vorgesehen ist und wobei ein zweiter der beiden symmetrischen Schlüssel zum Authentifizieren der verschlüsselten Daten vorgesehen ist,
• Speichern der beiden symmetrischen kryptographischen Schlüssel durch den ID-Token (200),
• Berechnen eines Authentifizierungstoken durch den ID-Token (200) unter Verwendung eines der beiden symmetrischen Schlüssel und des ephemeren öffentlichen Schlüssels,
• Senden des Authentifizierungstoken zusammen mit der Zufallszahl an das Nutzerauthentifizierungsmodul (322).

10. Verfahren nach Anspruch 9, wobei das Verfahren ferner umfasst:

• Berechnen der beiden symmetrischen kryptographischen Schlüssel durch das Nutzerauthentifizierungsmodul (322) unter Verwendung des gemeinsamen, geteilten Geheimnisses (232) und der übertragenen Zufallszahl,
• Verifizieren des übertragenen Authentifizierungstoken durch das Nutzerauthentifizierungsmodul (322) unter Verwendung eines der beiden symmetrischen Schlüssel und des ephemeren öffentlichen Schlüssels (326).

11. Verfahren nach einem der Ansprüche 9 bis 10, wobei das Verfahren ferner umfasst: auf ein Logout-Kommando hin Löschen der beiden symmetrischen kryptographischen Schlüssel auf dem Computer (300) und/oder Senden eines Löschkommandos zum Löschen der beiden symmetrischen kryptographischen Schlüssel an den ID-Token (200).

12. Verfahren nach einem der vorhergehenden Ansprüche, wobei das Verfahren ferner umfasst:
Zurücksetzen eines internen Zustands des ID-Tokens (200), welcher dem ersten Programm zugeordnet ist, auf einen vorbestimmten Anfangszustand beim Umschalten von der ersten Kommunikationssitzung auf die zweite Kommunikationssitzung, oder
wobei das Verfahren ferner umfasst:

• Protokollieren eines Zustands des ID-Tokens (200) durch das Nutzerauthentifizierungsmodul (322),
• Programmübergreifendes Bereitstellen des protokollierten Zustands des ID-Tokens (200) für die Mehrzahl von Programmen (330, 332, 334, 336) durch das Nutzerauthentifizierungsmodul (322).

13. Verfahren nach einem der vorhergehenden Ansprüche, wobei das Nutzerauthentifizierungsmodul (322) im Falle einer simultanen Auswahl von mehr als einem der Programme (330, 332, 334, 336) eine Reihenfolge festlegt, in der Kommunikationssitzungen zwischen den einzelnen Programmen (330, 332, 334, 336) und dem ID-Token (200) ausgeführt werden.

14. Verfahren nach einem der vorhergehenden Ansprüche, wobei das Nutzerauthentifizierungsmodul (322) ein erstes Ende und der ID-Token (200) ein zweites Ende eines ende-zu-ende-verschlüsselten Übertragungskanals (402, 404, 406, 408) zum Datenaustausch zwischen den einzelnen Programmen (330, 332, 334, 336) und dem ID-Token (200) bilden oder
wobei die Programme (330, 332, 334, 336) jeweils ein erstes Ende und der ID-Token (200) ein zweites Ende eines ende-zu-ende-verschlüsselten Übertragungskanals (402, 404, 406, 408) zum Datenaustausch zwischen dem entsprechenden Programm (330, 332, 334, 336) und dem ID-Token (200) bilden.

15. ID-Token (200) zum Authentifizieren eines Nutzers gegenüber einer Mehrzahl von Programmen (330, 332, 334, 336) derselben Sicherheitsdomäne, wobei der ID-Token (200) dem Nutzer kryptographisch gesichert zugeordnet ist, wobei der ID-Token (200) eine Kommunikationsschnittstelle (240) zur kontaktlosen Kommunikation mit einem an einen Computer (300) gekoppeltes Terminal (340) umfasst, wobei in dem ID-Token (200) ein mit dem Computer (300) gemeinsames, geteiltes Geheimnis (232) gespeichert ist,

wobei das gemeinsame, geteilte Geheimnis (232) dazu vorgesehen ist Kommunikationssitzungen zwischen den einzelnen Programmen (330, 332, 334, 336) und dem ID-Token (200) jeweils durch eine Ende-zu-Ende-Verschlüsselung zu schützen,
wobei der ID-Token (200) dazu konfiguriert ist, das gemeinsame, geteilte Geheimnis (232) bei einem Umschalten von einer der Kommunikationssitzungen zur anderen beizubehalten, und wobei der ID-Token (200) zum Ausführen des Verfahrens nach einem der vorhergehenden Ansprüche konfiguriert ist.

16. Nutzerauthentifizierungsmodul (322) zum Authentifizieren eines Nutzers gegenüber einer Mehrzahl von Programmen (330, 332, 334, 336) derselben Sicherheitsdomäne mittels eines ID-Tokens (200), der dem Nutzer kryptographisch gesichert zugeordnet ist,

wobei das Nutzerauthentifizierungsmodul (322) ein mit dem ID-Token (200) gemeinsames, geteiltes Geheimnis (232) verwaltet,
wobei das Nutzerauthentifizierungsmodul dazu konfiguriert ist das gemeinsame, geteilte Geheimnis (232) für Mehrzahl von Programmen (330, 332, 334, 336) bereitzustellen und zwischen einzelnen Kommunikationssitzungen der Programme (330, 332, 334, 336) und dem ID-Token (200) umzuschalten, wobei die zweite Kommunikationssitzung einen Datenaustausch nach einem Request-Response-Protokoll umfasst, welcher durch eine Ende-zu-Ende-Verschlüsselung unter Verwendung des gemeinsamen, geteilten Geheimnisses (232) geschützt ist, wobei das Nutzerauthentifizierungsmodul (322) zu der Sicherheitsdomäne gehört, und
wobei das Nutzerauthentifizierungsmodul (322) zum Ausführen des Verfahrens nach einem der Ansprüche 1 bis 14 konfiguriert ist.

17. Computer (300) mit einem Nutzerauthentifizierungsmodul (322) zum Authentifizieren eines Nutzers gegenüber einer Mehrzahl von Programmen (330, 332, 334, 336) derselben Sicherheitsdomäne mittels eines ID-Tokens (200) nach Anspruch 15, wobei an den Computer (300) ein Terminal (340) mit einer ersten Kommunikationsschnittstelle (342) zur Kommunikation mit dem ID-Token (200) gekoppelt ist, wobei der Computer (300) das mit dem ID-Token (200) gemeinsame, geteilte Geheimnis (232) umfasst, und
wobei der Computer (300) zum Ausführen des Verfahrens nach einem der Ansprüche 1 bis 14 konfiguriert ist.

18. System (100) zum Authentifizieren eines Nutzers gegenüber einer Mehrzahl von Programmen (330, 332, 334, 336) einer Sicherheitsdomäne mittels eines ID-Tokens (200) nach Anspruch 15 und eines Computers (300) nach Anspruch 17, und
wobei das System die Sicherheitsdomäne umfasst, zu welcher die Programme (330, 332, 334, 336) und das Nutzerauthentifizierungsmodul (322) gehören.

## Claims

1. A method for authenticating a user with respect to a plurality of programs (330, 332, 334, 336) of the same security domain by means of a computer (300) and an ID token (200), the ID token (200) being assigned to the user in a cryptographically protected manner,

a terminal (340) comprising a first communication interface (240) for communicating with the ID token (200) being coupled to the computer (300),
the ID token (200) comprising a second communication interface (342) for communicating with the terminal (340),
each of the programs (330, 332, 334, 336) being configured in such a way that the particular program (330, 332, 334, 336) requires a successful authentication of the user with respect to the corresponding program (330, 332, 334, 336),

the computer (300) and the ID token (200) each including a common, shared secret (232), which is provided for carrying out end-to-end encryption, the common, shared secret (232) being managed on the computer (300) by a user authentication module (322), the user authentication module (322) belonging to the security domain, wherein the method comprises:

- selecting a first program of the plurality of programs (330, 332, 334, 336);
- providing the common, shared secret (232) for the first program by the user authentication module (322);
- carrying out a first communication session between the first program and the ID token (200), the first communication session encompassing a data exchange, according to a request-response protocol, which is protected by end-to-end encryption, using the common, shared secret (232);
- selecting a second program of the plurality of programs (330, 332, 334, 336);
- providing the common, shared secret (232) for the second program by the user authentication module (322); and
- after the first communication session has ended, switching to a second communication session between the second program and the ID token (200), the second communication session encompassing a data exchange, according to a request-response protocol, which is protected by end-to-end encryption, using the common, shared secret (232).

2. The method according to claim 1, wherein the common, shared secret (232) is stored on the ID token (200) in a volatile memory (230) or a non-volatile memory (220) of the ID token (200) and/or wherein the common, shared secret (232) is stored on the computer (300) in a volatile memory (328) or a non-volatile memory (320) of the computer (300).

3. A method according to any one of the preceding claims, wherein the method furthermore comprises:

- receiving a certificate (226) from the ID token (200) by which the ID token (200) is assigned to the user in a cryptographically protected manner;
- verifying the certificate (226); and
- establishing the user to be authenticated with respect to the programs (330, 332, 334, 336) based on the verified certificate (226), or

wherein the method furthermore comprises:

- receiving an input which establishes the user to be authenticated with respect to the programs (330, 332, 334, 336).

4. A method according to any one of the preceding claims, wherein the computer (300) comprises a detection device (350) for detecting an identifier of the user, and wherein the method furthermore comprises:

authenticating the user with respect to the ID token (200), the authentication comprising:

- detecting an identifier of the user by the detection device (350) of the computer (300);
- verifying the detected identifier, using a cryptographically protected data exchange between the computer (300) and the ID token (200), as well as a reference value (234) for the identifier stored in a protected memory area (222) of the ID token (200); or

wherein the ID token (200) comprises a detection device for detecting an identifier of the user, and wherein the method furthermore comprises:

authenticating the user with respect to the ID token (200), the authentication comprising:

- detecting an identifier of the user by the detection device of the ID token (200); and
- verifying the detected identifier, using a reference value (234) for the identifier stored in a protected memory area (222) of the ID token (200).

5. The method according to claim 4, wherein a status flag (233) of the user authentication is set by the ID token (200) in response to a successful verification of the detected identifier, and a communication session between a program of the plurality of programs (330, 332, 334, 336) and the ID token (200) is only carried out in the case of a positive check of the status flag (233).

6. The method according to claim 5, wherein the method furthermore comprises:

• receiving the status flag (233) by the user authentication module (322); and
• managing the status flag (233) by the user authentication module (322), together with the common, shared secret (232), so that the status flag (233) is provided together with the common, shared secret (232) by the user authentication module (322) for the corresponding program in response to a selection of one of the programs of the plurality of programs (330, 332, 334, 336), and a communication session between the corresponding program and the ID token (200) is only carried out in the case of a positive check of the provided status flag (233).

7. A method according to any one of the preceding claims, wherein the ID token (200) comprises a static asymmetric key pair comprising a static private and a static public key (228, 229), the static private key (229) being stored in a protected memory area (222) of the ID token (200), and wherein the method furthermore comprises:
generating the common, shared secret (232), the generation of the common, shared secret (232) comprising:

• sending the static public key (228) to the user authentication module (322);
• generating an ephemeral asymmetric key pair by the user authentication module (322), the generated asymmetric key pair comprising an ephemeral private and an ephemeral public key (326, 327);
• sending the ephemeral public key (326) to the ID token (200);
• calculating the common, shared secret (232) by the ID token (200), using the static private key (229) and the ephemeral public key (326);
• storing the common, shared secret (232) by the ID token (200);
• calculating the common, shared secret (232) by the user authentication module (322), using the ephemeral private key (327) and the static public key (228); and
• managing the common. shared secret (232) by the user authentication module (322).

8. A method according to any one of the preceding claims, wherein the method furthermore comprises: deleting, in response to a logout command, the common, shared secret (232) and/or the status flag (233) on the computer (300) and/or sending a delete command for deleting the common, shared secret (232) and/or the status flat (233) to the ID token (200); and/or
wherein the common, shared secret (232) and/or the status flag (233) remain stored in the volatile memory (230) or the non-volatile memory (220) of the ID token (200) during a switch from one communication session to another communication session.

9. The method according to either claim 7 or 8, wherein the method furthermore comprises:

• calculating a random number by the ID token (200);
• calculating two symmetric cryptographic keys by the ID token (200), using the common, shared secret (232) and the random number, a first of the two symmetric keys being provided for encrypting data to be transmitted, and a second of the two symmetric keys being provided for authenticating the encrypted data;
• storing the two symmetric cryptographic keys by the ID token (200):
• calculating an authentication token by the ID token (200), using one of the two symmetric keys and of the ephemeral public key; and
• sending the authentication token, together with the random number, to the user authentication module (322).

10. The method according to claim 9, wherein the method furthermore comprises:

• calculating the two symmetric cryptographic keys by the user authentication module (322), using the common, shared secret (232) and the transmitted random number; and
• verifying the transmitted authentication token by the user authentication module (322), using one of the two symmetric keys and of the ephemeral public key (326).

11. The method according to either claim 9 or 10, wherein the method furthermore comprises: deleting, in response to a logout command, the two symmetric cryptographic keys on the computer (300) and/or sending a delete command for deleting the two symmetric cryptographic keys to the ID token (200).

12. A method according to any one of the preceding claims, wherein the method furthermore comprises:

resetting an internal state of the ID token (200) which is assigned to the first program to a predetermined initial state during the switch from the first communication session to the second communication session; or

wherein the method furthermore comprises:

• logging a state of the ID token (200) by the user authentication module (322); and
• providing, across programs, the logged state of the ID token (200) for the plurality of programs (330, 332, 334, 336) by the user authentication module (322).

13. A method according to any one of the preceding claims, wherein the user authentication module (322), in the event of a simultaneous selection of more than one of the programs (330, 332, 334, 336), establishes an order in which communication sessions between the individual programs (330, 332, 334, 336) and the ID token (200) are carried out.

14. A method according to any one of the preceding claims, wherein the user authentication module (322) forms a first end and the ID token (200) forms a second end of an end-to-end encrypted transmission channel (402, 404, 406, 408) for the data exchange between the individual programs (330, 332, 334, 336) and the ID token (200); or wherein the programs (330, 332, 334, 336) in each case form a first end and the ID token (200) forms a second end of an end-to-end encrypted transmission channel (402, 404, 406, 408) for the data exchange between the corresponding program (330, 332, 334, 336) and the ID token (200).

15. An ID token (200) for authenticating a user with respect to a plurality of programs (330, 332, 334, 336) of the same security domain, the ID token (200) being assigned to the user in a cryptographically protected manner, the ID token (200) comprising a communication interface (240) for contactlessly communicating with a terminal (340) coupled to a computer (300), a shared secret (232) in common with the computer (300) being stored in the ID token (200); the common, shared secret (232) being provided for protecting communication sessions between the individual programs (330, 332, 334, 336) and the ID token (200) in each case by end-to-end encryption; and the ID token (200) being configured to maintain the common, shared secret (232) during a switch from one of the communication sessions to the other, and the ID token (200) being configured to carry out the method according to any one of the preceding claims.

16. A user authentication module (322) for authenticating a user with respect to a plurality of programs (330, 332, 334, 336) of the same security domain by means of an ID token (200) assigned to the user in a cryptographically protected manner,

the user authentication module (322) managing a shared secret (232) in common with the ID token (200); the user authentication module being configured to provide the common, shared secret (232) for a plurality of programs (330, 332, 334, 336), and to switch between individual communication sessions of the programs (330, 332, 334, 336) and the ID token (200), the second communication session comprising a data exchange, according to a request-response protocol, which is protected by end-to-end encryption, using the common, shared secret (232), the user authentication module (322) belonging to the security domain; and the user authentication module (322) being configured to carry out the method according to any one of claims 1 to 14.

17. A computer (300), comprising a user authentication module (322) for authenticating a user with respect to a plurality of programs (330, 332, 334, 336) of the same security domain by means of an ID token (200) according to claim 15, a terminal (340) comprising a first communication interface (342) for communicating with the ID token (200) being coupled to the computer (300), the computer (300) comprising the shared secret (232) in common with the ID token (200); and the computer (300) being configured to carry out the method according to any one of claims 1 to 14.

18. A system (100) for authenticating a user with respect to a plurality of programs (330, 332, 334, 336) of a security domain by means of an ID token (200) according to claim 15, and a computer (300) according to claim 17, and the system comprising the security domain to which the programs (330, 332, 334, 336) and the user authentication module (322) belong.

**Revendications**

1. Procédé d'authentification d'un utilisateur vis-à-vis d'une multiplicité de programmes (330, 332, 334, 336) des mêmes domaines de sécurité au moyen d'un ordinateur (300) et d'un jeton d'ID (200), dans lequel le jeton d'ID (200) est associé sécurisé de manière cryptographique à l'utilisateur,

dans lequel un terminal (340) avec une première interface de communication (240) est couplé à l'ordinateur (300) pour la communication avec le jeton d'ID (200),
dans lequel le jeton d'ID (200) comprend une deuxième interface de communication (342) pour la communication avec le terminal (340),
dans lequel chacun des programmes (330, 332, 334, 336) est conçu de telle manière que le programme (330, 332, 334, 336) en question nécessite une authentification réussie de l'utilisateur vis-à-vis du programme (330, 332, 334, 336) correspondant,
dans lequel l'ordinateur (300) et le jeton d'ID (200) comprennent respectivement un code secret (232) commun partagé, lequel est prévu pour l'exécution d'un chiffrement de bout en bout, où le code secret (232) commun partagé est géré au niveau de l'ordinateur (300) par un module d'authentification d'utilisateur (232), où le module d'authentification d'utilisateur (322) fait partie des domaines de sécurité,
le procédé comprenant :

• la sélection d'un premier programme de la multiplicité des programmes (330, 332, 334, 336),
• la mise au point du code secret (232) commun partagé pour le premier programme par le module d'authentification d'utilisateur (322),
• l'exécution d'une première session de communication entre le premier programme et le jeton d'ID (200), où la première session de communication comprend un échange de données selon un protocole d'interrogation-réponse, lequel est protégé par un chiffrement de bout en bout moyennant l'emploi du code secret (232) commun partagé,
• la sélection d'un deuxième programme de la multiplicité des programmes (330, 332, 334, 336),
• la mise au point du code secret (232) commun partagé pour le deuxième programme par le module d'authentification d'utilisateur (322), et
• à la fin de la première session de communication, la commutation vers une deuxième session de communication entre le deuxième programme et le jeton d'ID (200), où la deuxième session de communication comprend un échange de données selon un protocole d'interrogation-réponse, lequel est protégé par un chiffrement de bout en bout moyennant l'emploi du code secret (232) commun partagé.

2. Procédé selon la revendication 1, dans lequel le code secret (232) commun partagé est stocké sur le jeton d'ID (200) dans une mémoire volatile (230) ou dans une mémoire non volatile (220) du jeton d'ID (200), et/ou dans lequel le code secret (232) commun partagé est stocké sur l'ordinateur (300) dans une mémoire volatile (328) ou dans une mémoire non volatile (320) de l'ordinateur (300).

3. Procédé selon l'une des revendications précédentes, le procédé comprenant en outre :

• la réception d'un certificat (226) à partir du jeton d'ID (200), par lequel le jeton d'ID (200) est associé sécurisé de manière cryptographique à l'utilisateur,
• la vérification du certificat (226),
• la détermination de l'utilisateur à authentifier vis-à-vis des programmes (330, 332, 334, 336) à l'aide du certificat (226) vérifié, ou
le procédé comprenant en outre :
la réception d'une indication, laquelle détermine l'utilisateur à authentifier vis-à-vis des programmes (330, 332, 334, 336).

4. Procédé selon l'une des revendications précédentes, dans lequel l'ordinateur (300) comprend un dispositif de détection (350) permettant de détecter un identifiant de l'utilisateur et où le procédé comprend en outre :

l'authentification de l'utilisateur vis-à-vis du jeton d'ID (200), où l'authentification comprend :

• la détection d'un identifiant de l'utilisateur par le dispositif de détection (350) de l'ordinateur (300),
• la vérification de l'identifiant détecté moyennant l'emploi d'un échange de données sécurisé par cryptographie entre l'ordinateur (300) et le jeton d'ID (200) ainsi que d'une valeur de référence (234) pour l'identifiant stockée dans une zone de mémoire (222) sécurisée du jeton d'ID (200), ou

dans lequel le jeton d'ID (200) comprend un dispositif de détection permettant la détection d'un identifiant de l'utilisateur et où le procédé comprend en outre :
l'authentification de l'utilisateur vis-à-vis du jeton d'ID (200), l'authentification comprenant :

- la détection d'un identifiant de l'utilisateur par le dispositif de détection du jeton d'ID (200),
- la vérification de l'identifiant détecté moyennant l'emploi d'une valeur de référence (234) pour l'identifiant stockée dans une zone de mémoire (222) sécurisée du jeton d'ID (200).

5. Procédé selon la revendication 4, dans lequel, suite à une vérification réussie de l'identifiant détecté, un drapeau d'état (233) de l'authentification de l'utilisateur est établi par le jeton d'ID (200) et une session de communication entre un programme de la multiplicité des programmes (330, 332, 334, 336) et le jeton d'ID (200) n'est exécutée qu'à la condition d'une vérification positive du drapeau d'état (233).

6. Procédé selon la revendication 5, le procédé comprenant en outre :

- la réception du drapeau d'état (233) par le module d'authentification d'utilisateur (322),
- la gestion du drapeau d'état (233) par le module d'authentification d'utilisateur (322) conjointement avec un code secret (232) commun partagé, de sorte que le drapeau d'état (233) est mis au point suite à une sélection d'un des programmes de la multiplicité des programmes (330, 332, 334, 336) conjointement avec le code secret (232) commun partagé, par le module d'authentification d'utilisateur (322), pour le programme correspondant et une session de communication entre le programme en question et le jeton d'ID (200) n'est exécutée qu'à la condition d'une vérification positive du drapeau d'état (233) mis au point.

7. Procédé selon l'une des revendications précédentes, dans lequel le jeton d'ID (200) comprend une paire de clés statiques asymétriques, laquelle présente une clé privée statique et une clé publique statique (228, 229), où la clé privée statique (229) est stockée dans une zone de mémoire (222) sécurisé du jeton d'ID (200), et où le procédé comprend en outre :
la création du code secret (232) commun partagé, la création du code secret (232) commun partagé comprenant :

- l'envoi de la clé publique statique (228) au module d'authentification d'utilisateur (322),
- la création d'une paire de clés asymétrique éphémère par le module d'authentification d'utilisateur (322), où la paire de clés asymétrique créée présente une clé privée éphémère et une clé publique éphémère (326, 327),
- l'envoi de la clé publique éphémère (326) au jeton d'ID (200),
- le calcul du code secret (232) commun partagé par le jeton d'ID (200) moyennant l'emploi de la clé privée statique (229) et de la clé publique éphémère (326),
- le stockage du code secret (232) commun partagé par le jeton d'ID (200),
- le calcul du code secret (232) commun partagé par le module d'authentification d'utilisateur (322) moyennant l'emploi de la clé privée éphémère (327) et de la clé publique statique (228),
- la gestion du code secret (232) commun partagé par le module d'authentification d'utilisateur (322).

8. Procédé selon l'une des revendications précédentes, le procédé comprenant : suite à une commande de déconnexion, l'effacement du code secret (232) commun partagé et/ou du drapeau d'état (233) sur l'ordinateur (300) et/ou l'envoi d'une commande d'effacement pour l'effacement du code secret (232) commun partagé et/ou du drapeau d'état (233) au jeton d'ID (200) et/ou
où le code secret (232) commun partagé et/ou le drapeau d'état (233) restent stockés dans la mémoire volatile (230) ou dans la mémoire non volatile (220) du jeton d'ID (200) lors d'une commutation d'une session de communication vers une autre session de communication.

9. Procédé selon l'une des revendications 7 à 8, le procédé comprenant en outre :

- le calcul d'un nombre aléatoire par le jeton d'ID (200),
- le calcul de deux clés cryptographiques symétriques par le jeton d'ID (200) moyennant l'emploi du code secret (232) commun partagé et du nombre aléatoire, où une première des deux clés symétriques est prévue pour chiffrer des données à transmettre et où une deuxième des deux clés symétriques est prévue pour l'authentification de données chiffrées,
- le stockage des deux clés cryptographiques symétriques par le jeton d'ID (200),
- le calcul d'un jeton d'authentification par le jeton d'ID (200) moyennant l'emploi d'une des deux clés symétriques et de la clé publique éphémère,
- l'envoi du jeton d'authentification conjointement avec le nombre aléatoire au module d'authentification d'utilisateur (322).

10. Procédé selon la revendication 9, le procédé comprenant en outre :

   • le calcul des deux clés cryptographiques symétriques par le module d'authentification d'utilisateur (322) moyennant l'emploi du code secret (232) commun partagé et du nombre aléatoire transmis,
   • la vérification du jeton d'authentification transmis par le module d'authentification d'utilisateur (322) moyennant l'emploi d'une des deux clés symétriques et de la clé publique éphémère (326).

11. Procédé selon l'une des revendications 9 à 10, le procédé comprenant en outre: suite à une commande de déconnexion, l'effacement des deux clés cryptographiques symétriques sur l'ordinateur (300) et/ou l'envoi au jeton d'ID (200) d'une commande d'effacement pour effacer les deux clés cryptographiques symétriques.

12. Procédé selon l'une des revendications précédentes, le procédé comprenant en outre :
   la réinitialisation vers un état interne du jeton d'ID (200), lequel est associé au premier programme, suite à un état de départ prédéfini à partir de la première session de communication vers la deuxième session de communication, ou le procédé comprenant en outre :

   • l'application d'un protocole à un état du jeton d'ID (200) par le module d'authentification d'utilisateur (322),
   • la mise au point englobant le programme de l'état conforme au protocole du jeton d'ID (200) pour la multiplicité des programmes (330, 332, 334, 336) par le module d'authentification d'utilisateur (322).

13. Procédé selon l'une des revendications précédentes, dans lequel le module d'authentification d'utilisateur (322), dans le cas d'une sélection simultanée de plus d'un parmi les programmes (330, 332, 334, 336), fixe un ordre dans lequel des sessions de communication sont exécutées entre les programmes (330, 332, 334, 336) individuels et le jeton d'ID (200).

14. Procédé selon l'une des revendications précédentes, dans lequel le module d'authentification d'utilisateur (322) forme une première extrémité et le jeton d'ID (200) forme une deuxième extrémité d'un canal de transmission (402, 404, 406, 408) chiffré de bout en bout pour l'échange de données entre les programmes (330, 332, 334, 336) individuels et le jeton d'ID (200), ou
   dans lequel les programmes (330, 332, 334, 336) forment respectivement une première extrémité et le jeton d'ID une deuxième extrémité d'un canal de transmission (402, 404, 406, 408) chiffré de bout en bout pour l'échange de données entre le programme (330, 332, 334, 336) correspondant et le jeton d'ID (200).

15. Jeton d'ID (200) destiné à l'authentification d'un utilisateur vis-à-vis d'une multiplicité de programmes (330, 332, 334, 336) des mêmes domaines de sécurité, où le jeton d'ID (200) est associé sécurisé de manière cryptographique à l'utilisateur, où le jeton d'ID (200) comprend une interface de communication (240) pour la communication sans contact avec un terminal (340) couplé avec un ordinateur (300), où un code secret (232) commun partagé avec l'ordinateur (300) est stocké dans le jeton d'ID (200),

   dans lequel le code secret (232) commun partagé est prévu pour la protection de sessions de communication entre les programmes (330, 332, 334, 336) individuels et le jeton d'ID (200) respectivement par un chiffrement de bout en bout,
   où le jeton d'ID (200) est conçu pour conserver le code secret (232) commun partagé lors d'une commutation d'une session de communication vers l'autre, et où le jeton d'ID (200) est conçu pour l'exécution du procédé selon l'une des revendications précédentes.

16. Module d'authentification d'utilisateur (322) destiné à l'authentification d'un utilisateur vis-à-vis d'une multiplicité de programmes (330, 332, 334, 336) des mêmes domaines de sécurité au moyen d'un jeton d'ID (200) qui est associé sécurisé de manière cryptographique à l'utilisateur,

   où le module d'authentification d'utilisateur (322) gère un code secret (232) commun partagé avec le jeton d'ID (200),
   où le module d'authentification d'utilisateur est conçu pour mettre au point le code secret (232) commun partagé pour la multiplicité de programmes (330, 332, 334, 336) et commuter entre des sessions de communication individuelles des programmes (330, 332, 334, 336) et le jeton d'ID (200), où la deuxième session de communication comprend un échange de données selon un protocole d'interrogation-réponse, lequel est protégé par un chiffrement de bout en bout moyennant l'emploi du code secret (232) commun partagé, où le module d'authentification d'utilisateur (322) fait partie des domaines de sécurité, et
où le module d'authentification d'utilisateur (322) est conçu pour l'exécution du procédé selon l'une des revendications 1 à 14.

17. Ordinateur (300) doté d'un module d'authentification d'utilisateur (322) permettant l'authentification d'un utilisateur vis-à-vis d'une multiplicité de programmes (330, 332, 334, 336) des mêmes domaines de sécurité au moyen d'un jeton d'ID (200) selon la revendication 15, dans lequel un terminal (340) avec une première interface de communication (342) est couplé à l'ordinateur (300) pour la communication avec le jeton d'ID (200), où l'ordinateur (300) comprend le code secret (232) commun partagé avec le jeton d'ID (200), et
où l'ordinateur (300) est conçu pour l'exécution du procédé selon l'une des revendications 1 à 14.

18. Système (100) d'authentification d'un utilisateur vis-à-vis d'une multiplicité de programmes (330, 332, 334, 336) d'un domaine de sécurité au moyen d'un jeton d'ID (200) selon la revendication 15 et d'un ordinateur (300) selon la revendication 17, et
où le système comprend des domaines de sécurité auxquels correspondent les programmes (330, 332, 334, 336) et le module d'authentification d'utilisateur (322).

Fig. 1

Fig. 2

Fig. 3

200

ID-Token

322

Nutzer-authentifizierungs-modul

600 — Zertifikat

602 — Verifizieren Zertifikat

640 — $PK_{Tok}, D_{Tok}$

642 — $PK_{Term}, SK_{Term}$

644 — $PK_{Term}$

646 — $K = KA(SK_{Term}, PK_{Tok}, D_{Tok})$

648 — $K = KA(SK_{Tok}, PK_{Term}, D_{Tok})$

650 — $r_{Tok}, T_{Tok} = MAC(K_{MAC}, PK_{Term})$

652 — $r_{Tok}, T_{Tok} = MAC(K_{MAC}, PK_{Term})$

654 — Verifizieren $T_{Tok}$

CA

660 — Erfassen Kennung

662 — Kennung

664 — Verifizieren Kennung

666 — Setzen Statusflag

668 — Abfrage Authentisierungsstatus

670 — Authentisierungsstatus

Fig. 4

$$PK_{Tok}, D_{Tok}$$

$$K = KA(\widetilde{SK_{Term}}, PK_{Tok}, D_{Tok})$$

$$K = KA(SK_{Tok}, \widetilde{PK_{Term}}, D_{Tok})$$

$$r_{Tok}, T_{Tok} = MAC(K_{MAC}, \widetilde{PK_{Term}})$$

Fig. 5

ID-Token ~ 200

Nutzerauthentifizierungsmodul ~ 322

800 ............ Zertifikat ............→

802 ............................ Verifizieren Zertifikat

840 ............ $PK_{Tok}, D_{Tok}$ ............→

842 ............................ $\overline{PK_{Term}}, \overline{SK_{Term}}$

844 ←............ $\overline{PK_{Term}}$ ............

846 ............................ $K = KA\left(\overline{SK_{Term}}, PK_{Tok}, D_{Tok}\right)$

848 $K = KA\left(SK_{Tok}, \overline{PK_{Term}}, D_{Tok}\right)$

850 $r_{Tok}, T_{Tok} = MAC\left(K_{MAC}, \overline{PK_{Term}}\right)$

852 ............ $r_{Tok}, T_{Tok}$ ............→ $r_{Tok}, T_{Tok} = MAC\left(K_{MAC}, \overline{PK_{Term}}\right)$

854 ............................ Verifizieren $T_{Tok}$

CA

860 Erfassen Kennung

862 Verifizieren Kennung

864 Setzen Statusflag

866 ←............ Abfrage Authentisierungsstatus

868 ............→ Authentisierungsstatus

# Fig. 6

| | |
|---|---|
| Einbringen ID-Token in Terminal-Lesebereich | 900 |

↓

| | |
|---|---|
| Empfangen Zertifikat | 902 |

↓

| | |
|---|---|
| Verifizieren Zertifikat | 904 |

↓

| | |
|---|---|
| Authentifizieren Nutzer gegenüber ID-Token | 906 |

↓

| | |
|---|---|
| Erzeugen gemeinsames, geteiltes Geheimnis | 908 |

↓

| | |
|---|---|
| Auswahl erstes Programm | 910 |

↓

| | |
|---|---|
| Ausführen erste Kommunikationssitzung | 912 |

↓

| | |
|---|---|
| Auswahl zweites Programm | 914 |

↓

| | |
|---|---|
| Umschalten auf zweite Kommunikationssitzung | 916 |

↓

| | |
|---|---|
| Authentifizieren Nutzer gegenüber zweitem Programm | 918 |

Fig. 7

| Einbringen ID-Token in Terminal-Lesebereich | 1000 |

| Empfangen Zertifikat | 1002 |

| Verifizieren Zertifikat | 1004 |

| Erzeugen gemeinsames, geteiltes Geheimnis | 1006 |

| Authentifizieren Nutzer gegenüber ID-Token | 1008 |

| Erzeugen Authentifizierungsstatus | 1010 |

| Auswahl erstes Programm | 1012 |

| Ausführen erste Kommunikationssitzung | 1014 |

| Auswahl zweites Programm | 1016 |

| Umschalten auf zweite Kommunikationssitzung | 1018 |

| Authentifizieren Nutzer gegenüber zweitem Programm | 1020 |

Fig. 8

**IN DER BESCHREIBUNG AUFGEFÜHRTE DOKUMENTE**

**In der Beschreibung aufgeführte Patentdokumente**

- US 2004177258 A1
- EP 2916252 A1